# EUROPEAN PATENT APPLICATION

(11) **EP 4 615 018 A1**
(43) Date of publication of application: **10.09.2025**
(21) Application number: 24741678.7
(22) Date of filing: 09.01.2024
(51) Int. Cl.: H04W 4/80, H04W 8/00, H04W 8/26, H04W 72/04, G01S 13/02, H04L 69/14

(54) **ULTRAWIDE BAND DEVICE FOR TRANSMITTING AND RECEIVING PLURALITY OF PACKETS AND OPERATION METHOD THEREOF**

(30) Priority: 09.01.2023 KR 20230003142; 26.05.2023 KR 20230068671
(71) Applicant: Samsung Electronics Co., Ltd., Suwon-si, Gyeonggi-do 16677 (KR)
(72) Inventor: HA, Taeyoung, Suwon-si Gyeonggi-do 16677 (KR); LEE, Mingyu, Suwon-si Gyeonggi-do 16677 (KR); SO, Youngwan, Suwon-si Gyeonggi-do 16677 (KR)
(74) Representative: Gulde & Partner
(86) International application number: PCT/KR2024/000434
(87) International publication number: WO 2024/151057

(57) **Abstract**

Disclosed is a method for UWB multiplexing transmission. A method performed by a first UWB device according to an embodiment disclosed herein may comprise the steps of: transmitting a ranging control message for UWB multiplexing transmission, the ranging control message being transmitted in a first slot within a ranging round through UWB or NB; transmitting a triggering packet for triggering the UWB multiplexing transmission, the triggering packet being transmitted in a second slot within the ranging round through the UWB or NB; receiving, through the UWB, a first packet transmitted in a third slot within the ranging round by the second UWB device on the basis of the ranging control message; and receiving, through the UWB, a second packet transmitted in a third slot within the ranging round by a third UWB device on the basis of the ranging control message.

## Description

### [Technical Field]

The disclosure relates to ultra-wideband (UWB) communication and, more specifically, to a UWB device configured to transmit/receive multiple packets and a method for operating the same.

### [Background Art]

The Internet, which is a human centered connectivity network where humans generate and consume information, is now evolving to the Internet of things (IoT) where distributed entities, such as things, exchange and process information. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation. Recently, a sensor network, a machine-to-machine (M2M) communication, machine type communication (MTC), and so forth have been researched.

Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

With the advance of wireless communication systems, various services can be provided, and accordingly there is a need for ways to effectively provide these services. For example, a ranging technology for measuring the distance between electronic devices by using an ultra-wideband (UWB) may be used.

### [Detailed Description of the Invention]

### [Technical Problem]

The disclosure proposes a method in which power consumed when an ultra-wideband (UWB) device receives UWB packets from other UWB devices can be reduced.

### [Technical Solution]

According to an aspect of the disclosure, a method for operating a first ultra-wideband (UWB) device may include: transmitting a ranging control message for UWB multiple transmissions through a UWB or a narrow band (NB) in a first slot within a ranging round; transmitting a triggering packet for triggering the UWB multiple transmissions through the UWB or the NB in a second slot within the ranging round; receiving a first packet transmitted by a second UWB device in a third slot within the ranging round, based on the ranging control message, through the UWB; and receiving a second packet transmitted by a third UWB device in the third slot within the ranging round, based on the ranging control message, through the UWB.

According to an aspect of the disclosure, a method for operating a second ultra-wideband (UWB) device may include: receiving a ranging control message for UWB multiple transmissions from a first UWB device through a UWB or a narrow band (NB) in a first slot within a ranging round; receiving a triggering packet for triggering the UWB multiple transmissions from the first UWB device through the UWB or the NB in a second slot within the ranging round; and transmitting a first packet through the UWB in a third slot within the ranging round, based on the ranging control message, wherein the third slot within the ranging round is used for a second packed to be transmitted by a third UWB device, based on the ranging control message.

According to an aspect of the disclosure, a first ultra-wideband (UWB) device may include a transceiver and a controller connected to the transceiver and configured to control the transceiver. The first UWB device may be configured to transmit a ranging control message for UWB multiple transmissions through a UWB or a narrow band (NB) in a first slot within a ranging round; transmit a triggering packet for triggering the UWB multiple transmissions through the UWB or the NB in a second slot within the ranging round; receive a first packet transmitted by a second UWB device in a third slot within the ranging round, based on the ranging control message, through the UWB; and receive a second packet transmitted by a third UWB device in the third slot within the ranging round, based on the ranging control message, through the UWB.

According to an aspect of the disclosure, a second ultra-wideband (UWB) device may include a transceiver and a controller connected to the transceiver and configured to control the transceiver. The second UWB device may be configured to receive a ranging control message for UWB multiple transmissions from a first UWB device through a UWB or a narrow band (NB) in a first slot within a ranging round; receive a triggering packet for triggering the UWB multiple transmissions from the first UWB device through the UWB or the NB in a second slot within the ranging round; and transmit a first packet through the UWB in a third slot within the ranging round, based on the ranging control message. The third slot within the ranging round may be used for a second packed to be transmitted by a third UWB device, based on the ranging control message.

A method for operating a first ultra-wideband (UWB) device may include: transmitting a ranging control message for UWB communication in a first slot within a ranging round; receiving a first packet transmitted by a second UWB device in a second slot within the ranging round, based on the ranging control message; and receiving a second packet transmitted by a third UWB device in the second slot within the ranging round, based on the ranging control message.

According to various embodiments of the disclosure, a method for operating a second ultra-wideband (UWB) device may include: receiving a ranging control message for UWB communication from a first UWB device in a first slot within a ranging round; and transmitting a first packet in a second slot withing the ranging round, based on the ranging control message. A second packet may be transmitted by a third UWB device, based on the ranging control message, in the second slot within the ranging round.

According to various embodiments of the disclosure, a first ultra-wideband (UWB) device may include a transceiver and a controller connected to the transceiver and configured to control the transceiver. The controller may control a ranging control message for UWB communication to be transmitted in a first slot within a ranging round; control a first packet transmitted by a second UWB device in a second slot within the ranging round to be received, based on the ranging control message; and control a second packet transmitted by a third UWB device in the second slot within the ranging round to be received, based on the ranging control message.

According to various embodiments of the disclosure, a second ultra-wideband (UWB) device may include a transceiver and a controller connected to the transceiver and configured to control the transceiver. The controller may control a ranging control message for UWB communication to be received from a first UWB device in a first slot within a ranging round; and control a first packet to be transmitted in a second slot withing the ranging round, based on the ranging control message. A second packet may be transmitted by a third UWB device, based on the ranging control message, in the second slot within the ranging round.

### [Advantageous Effects]

A UWB device according to an embodiment of the disclosure may minimize and/or optimize the time needed to receive UWB packets from other UWB devices, thereby reducing power consumption.

A UWB device according to an embodiment of the disclosure may may efficiently receive multiple packets from multiple UWB devices.

### [Brief Description of Drawings]

FIG. 1 illustrates an exemplary architecture of an electronic device according to an embodiment of the disclosure.
FIG. 2 illustrates a communication system including multiple electronic devices according to an embodiment of the disclosure.
FIG. 3 illustrates a method in which multiple electronic devices perform communication according to an embodiment of the disclosure.
FIG. 4 illustrates the structure of a UWB MAC frame according to an embodiment of the disclosure.
FIG. 5 illustrates the structure of a UWB PHY packet according to an embodiment of the disclosure.
FIG. 6 illustrates an example of the structure of a ranging block and a round used for UWB ranging according to an embodiment of the disclosure.
FIG. 7 illustrates an example of the structure of a ranging round used for UWB ranging according to an embodiment of the disclosure.
FIG. 8 illustrates a ranging message exchange procedure according to a ranging scheme according to an embodiment of the disclosure.
FIG. 9 illustrates the structure of a synchronization header (SHR) used for UWB ranging according to an embodiment of the disclosure.
FIG. 10A is a diagram for describing a packet transmission method by a UWB device according to an embodiment of the disclosure.
FIG. 10B illustrates an RDM list field in an RDM IE according to an embodiment of the disclosure.
FIG. 11A is a diagram for describing a packet transmission method by a UWB device according to another embodiment of the disclosure.
FIG. 11B illustrates an RDM list field in an RDM IE according to another embodiment of the disclosure.
FIG. 12 illustrates a multi-transmission mode procedure according to an embodiment of the disclosure.
FIG. 13 illustrates an example of a scheduling IE for multiple transmissions according to an embodiment of the disclosure.
FIG. 14 illustrates an example of a multi-transmission method using the UWB according to an embodiment of the disclosure.
FIG. 15 illustrates an example of a multi-transmission method using an NB assist according to an embodiment of the disclosure.
FIG. 16 illustrates an example of a method for performing ranging through multiple transmissions by using an NB assist according to an embodiment of the disclosure.
FIG. 17 illustrates the structure of a first UWB device according to an embodiment of the disclosure.
FIG. 18 illustrates the structure of a second UWB device according to an embodiment of the disclosure.
FIG. 19 illustrates another example of a multi-transmission method using an NB assist according to an embodiment of the disclosure.
FIG. 20 illustrates the packet format of an NB control packet according to an embodiment of the disclosure.
FIG. 21 illustrates the packet format of an NB poll packet according to an embodiment of the present disclosure.

### [Mode for Carrying out the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, according to some embodiments, the "unit" may include one or more processors.

As used herein, the term "terminal" or "device" may also be referred to as a mobile station (MS), a user equipment (UE), a user terminal (UT), a wireless terminal, an access terminal (AT), a terminal, a subscriber unit, a subscriber station (SS), a wireless device, a wireless communication device, a wireless transmit/receive unit (WTRU), a mobile node, a mobile, or other terms. Various examples of the terminal may include a cellular phone, a smartphone having a wireless communication function, a personal digital assistant (PDA) having a wireless communication function, a wireless modem, a portable computer having a wireless communication function, a photographing device such as a digital camera having a wireless communication function, a gaming device having a wireless communication function, a music storage and playback home appliance having a wireless communication function, an Internet hole appliance capable of wireless Internet access and browsing, and portable units or terminals having integrated combinations of these functions. Further, the terminal may include a machine to machine (M2M) terminal, and a machine type communication (MTC) terminal/device, but is not limited thereto. In the specification, the terminal may also be referred to as an electronic device or simply as a device.

Hereinafter, the operation principle of the disclosure will be described in detail in conjunction with the accompanying drawings. In the following description of the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

Hereinafter, embodiments of the disclosure will be described in detail in conjunction with the accompanying drawings. In the following description of embodiments of the disclosure, a communication system using a UWB will be described by way of example, but the embodiments of the disclosure may be applied to other communication systems having similar technical backgrounds or characteristics. Examples of such communication systems may include communication systems Bluetooth or ZigBee. Therefore, based on determinations by those skilled in the art, the embodiments of the disclosure may be applied to other communication systems through some modifications without significantly departing from the scope of the disclosure.

Also, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In general, wireless sensor network technologies are largely divided into wireless local area network (WLAN) technologies and wireless personal area network (WPAN) technologies according to the distance of recognition. The WPAN technologies are based on IEEE 802.11 and enable accessing the backbone network at a radius of about 100m. The WPAN technologies are based on IEEE 802.15 and include Bluetooth, ZigBee, ultra-wideband (UWB), and the like. A wireless network in which such a wireless network technology is implemented may be configured by multiple electronic devices.

According to the definition of the Federal Communications Commission (FCC), the UWB may refer to a wireless communication technology which uses a bandwidth of 500 MHz or higher, or the bandwidth of which corresponding to the center frequency corresponds to 20% or higher. The UWB may also refer to the band itself to which UWB communication is applied. The UWB enables safe and accurate ranging between devices. Accordingly, the UWB enables relative position estimation based on the distance between two devices, or accurate position estimation of a device based on the device's distance from fixed devices (the positions of which are known).

Specific terms used in the following descriptions are provided to help the understanding of the disclosure, and the use of such specific terms may be changed to other forms without deviating from the technical idea of the disclosure.

"Application dedicated file (ADF)" may refer to a data structure within an application data structure which may host an application or application specific data, for example.

"Application protocol data unit (APDU)" may refer to a command and a response used in case of communicating with the application data structure inside a UWB device.

"Application specific data" may refer to a file structure having a root level and an application level, including UWB controllee information and UWB session data required for a UWB session, for example.

"Controller" may refer to a ranging Device which defines and controls ranging control messages (RCMs) (or control messages).

"Controllee" may refer to a ranging device which uses ranging parameters in the RCMs (or control message) received from the controller.

"Dynamic scrambled timestamp sequence (STS) mode" may refer to an operation mode in which the STS is not repeated during the ranging session, unlike "static STS." In this mode, the STS may be managed by the ranging device, and the ranging session key for generating the STS may be managed by a secure component.

"Applet" may refer to an applet executed on a secure component including UWB parameters and service data, for example. In the disclosure, the applet may be a FiRa applet defined by FiRa.

"Ranging device" may refer to a device capable of performing UWB ranging. In the disclosure, the ranging device may refer to an enhanced ranging device (ERDEV) defined in IEEE 802.15.4z, or a FiRa Device defined by FiRa. The ranging device may be referred to as a UWB device.

"UWB-enabled application" may refer to an application for a UWB service. For example, the UWB-enabled application may be an application which uses a framework API for configuring an OOB connector, a secure service, and/or a UWB service, for a UWB session. In the disclosure, "UWB-enabled application" may be abbreviated as an application or a UWB application. The UWB-enabled application may be a FiRa-enabled application defined by FiRa.

"Framework" may refer to a component which provides access to profiles, individual UWB configurations, and/or notifications. "Framework" may be a collection of logical software components including, for example, a profile manager, an OOB connector, a secure service and/or a UWB Service. In the disclosure, the framework may be a FiRa framework defined by FiRa.

"OOB connector" may refer to a software component for configuring an out-of-band (OOB) connection (for example, BLE connection) between ranging devices. In the disclosure, the OOB connector may refer to a FiRa OOB connector defined by FiRa.

"Profile" may refer to a predefined set of UWB and OOB configuration parameters. In the disclosure, the profile may refer to a FiRa profile defined by FiRa.

"Profile manager" may refer to a software component which implements profiles available to ranging devices. In the disclosure, the profile manager may refer to a FiRa profile manager defined by FiRa.

"Service" may refer to implementation of a use case which provides a service to an end-user.

"Smart ranging device" may refer to a ranging device which may implement an optional framework API. In the disclosure, the smart ranging device may refer to a FiRa smart device defined by FiRa.

"Global dedicated file (GDF)" may refer to the root level of application specific data containing data necessary to establish a USB session.

"Framework API" may refer to an API used by a UWB-enabled application to communicate with a framework.

"Initiator" may refer to a ranging device which initiates ranging exchange.

"Object identifier (OID)" may refer to the identifier of an ADF within an application data structure.

"Out-of-band (OOB)" may refer to data communication which does not use the UWB, as an underlying wireless technology.

"Ranging data set (RDS)" may refer to data (for example, a UWB session key, a session ID, and the like) required to configure a UWB session the confidentiality, authenticity, and integrity of which need to be protected.

"Responder" may refer to a ranging device which responds to the initiator during a ranging exchange.

"STS" may refer to a ciphered sequence for increasing the integrity and accuracy of ranging measurement timestamps. The STS may be generated from the ranging session key.

"Secure channel" may refer to a data channel which prevents overhearing and tampering.

"Secure component" may refer to an entity (for example, SE or TEE) having a defined security level so as to interface with a UWBS for the purpose of providing an RDS to the UWBS in case that a dynamic STS is used, for example.

"Secure element (SE)" may refer to a tamper-resistant secure hardware component which may be used as a secure component inside a ranging device.

"Secure ranging" may refer to ranging based on an STS generated through a strong encryption operation.

"Secure service" may refer to a software component for interfacing with a secure component, such as a secure element or a trusted execution environment (TEE).

"Service applet" may refer to an applet on a secure component which handles a service-specific transaction.

"Service data" may refer to data defined by a service provider, which needs to be transferred between two ranging devices in order to implement a service.

"Service provider" may refer to an entity which defines and provides hardware and software required to provide a specific service to an end-user.

"Static STS mode" refers to an operation mode in which an STS is repeated during a session, and does not need to be managed by a secure component.

"Secure UWB service (SUS) applet" may refer to an applet on an SE which communicates with the applet in order to search for data necessary to enable a secure UWB session with another ranging device. In addition, the SUS applet may transfer corresponding data (information) to a UWBS.

"UWB service" may refer to a software component which provides access to a UWBS.

"UWB session" may refer to a period of time between a timepoint at which a controller and a controllee start communicating via a UWB and a timepoint at which the communication stops. The UWB session may include ranging, data transfer, or both ranging/data transfer.

"UWB session ID" may refer to an ID (for example, a 32-bit integer) shared between a controller and a controllee to identify a UWB session.

"UWB session key" may refer to a key used to protect a UWB Session. The UWB session key may be used to generate an STS. In the disclosure, the UWB session key may refer to a UWB ranging session key (URSK), and may be abbreviated as a session key.

"UWB subsystem (UWBS)" may refer to a hardware component which implements UWB PHY and MAC layers (specifications). The UWBS may have an interface regarding a framework and an interface regarding a secure component for searching for an RDS. In the disclosure, the UWB PHY and MAC specifications may be FiRa PHY and FiRa MAC specifications defined by FiRa with reference to IEEE 802.15.4/4z, for example.

"One-way ranging (OWR)" may refer to a ranging scheme which uses a time difference of arrival (TDoA) localization method. The TDoA method corresponds to a method of locating a mobile device, based on the relative time of arrival of a single message or multiple messages. Descriptions in IEEE 802.15.4z may be referenced as descriptions regarding the OWR (TDoA). An example of the OWR scheme, the downlink (DL)-TDoA scheme may be included.

"DL-TDoA (DT)" may refer to a localization method which uses TDoA measurements from multiple DT-anchors. In an embodiment, DT-anchors may exchange a DT message (DTM) (ranging message) with each other, and DT-tags may passively receive the DTM. In an embodiment, respective DT-tags that receive DTMs may calculate the TDoA by using at least one of the reception timestamp of each DTM, the transmission time stamp of DTMs included in the DTMs, or the reply time included in the DTMs. In an embodiment, DT-tags may estimate locations thereof by using at least one of the calculated TDoA or the coordinates of DT-anchors.

"Two-way ranging (TWR)" may refer to a ranging scheme capable of estimating the relative distance between two devices by measuring the time of flight (ToF) through the exchange of a ranging message between the two devices. The TWR scheme may be one of double-sided two-way ranging (DS-TWR) and single-sided two-way ranging (SS-TWR). The SS-TWR may refer to a procedure of performing ranging through one round-trip time measurement. The DS-TWR may refer to a procedure of performing ranging through two round-trip time measurements. Descriptions in IEEE 802.15.4z may be referenced as descriptions regarding the SS-TWR and DS-TWR.

"UWB message" may refer to a message including a payload IE transmitted by a UWB device (for example, an ERDEV).

"Ranging message" may refer to a message transmitted by a UWB device (for example, an ERDEV) in a UWB ranging procedure. For example, the ranging message may be a message transmitted by a UWB device (for example, an ERDEV) in a specific phase of the ranging round, such as a ranging initiation message (RIM), a ranging response message (RRM), a ranging final message (RFM), or a measurement report message (MRM). The ranging message may include one or more UWB messages. If necessary, multiple ranging messages may be merged into one message. For example, in the case of non-deferred DS-TWR ranging, the RFM and MRM may be merged into one message in the ranging final phase.

"UWB channel" may refer to one of candidate UWB channels allocated for UWB communication. The candidate UWB channels allocated for UWB communication may be channels allocated for UWB communication defined in IEEE 802.15.4/4z. UWB channels may be used for UWB ranging and/or transaction. For example, UWB channels may be used to transmit/receive a ranging frame (RFRAME) and/or to transmit/receive a data frame.

"Narrow band (NB) channel" may refer to a channel with a narrower bandwidth than a UWB channel. The NB channel may be used to assist UWB communication. The NB channel may be a subchannel of one of candidate UWB channels allocated for UWB communication, or may be a channel that uses a specific bandwidth of another available band (for example, some of Industrial, Scientific and Medical (ISM) bands, and the like). Candidate UWB channels allocated for UWB communication may be channels allocated for UWB communication defined in IEEE 802.15.4/4z. The NB channel may be used for connection configurations for advertising, device discovery, and/or additional parameter negotiation/authentication. For example, the NB channel may be used to transmit/receive an advertisement message, an additional advertising message, a connection request message, and/or a connection confirmation message. In an embodiment, one or multiple NB channels may be operated together.

In addition, in connection with describing the disclosure, detailed descriptions of related known functions or configurations will be omitted if deemed to unnecessarily obscure the gist of the disclosure.

Hereinafter, various embodiments of the disclosure will be described with reference to the accompanying drawings.

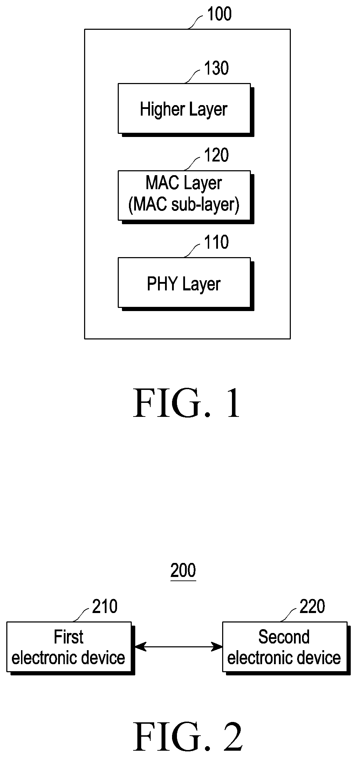

FIG. 1 illustrates an exemplary architecture of an electronic device according to an embodiment of the disclosure.

In the disclosure, the electronic device may be one of various types of electronic devices. For example, the electronic device may be a portable device (for example, a UE, a smartphone, a wearable device, a vehicle, or a tag device) or a stationary device (for example, a door lock, an anchor device, or the like).

Referring to FIG. 1, the electronic device 100 may include a PHY layer 110, a MAC layer (MAC sublayer) 120, and/or a higher layer 130.

### (1) PHY layer

The PHY layer 110 may include a low-level control entity and at least one transceiver. In the disclosure, the transceiver may be referred to as an RF transceiver or radio transceiver.

In an embodiment, the at least one transceiver may include a first transceiver configured to support UWB communication (for example, 802.15.4z-based UWB communication), a second transceiver configured to support NB communication which uses a narrower bandwidth than the bandwidth of the UWB communication, and/or a third transceiver configured to support other communication technologies (for example, Bluetooth, BLE, and the like). In the disclosure, the first transceiver may be referred to as a UWB transceiver, the second transceiver may be referred to as an NB transceiver, and the third transceiver may be referred to as an OOB transceiver. Meanwhile, according to an embodiment, one transceiver may support multiple communication technologies. For example, one transceiver may support UWB communication and NB communication.

In an embodiment, the PHY layer 110 may support at least one of the following functions:
- Transceiver activation and deactivation function (transceiver on/off function)
- Energy detection function
- Channel selection function
- Clear channel assessment (CCA) function
- Synchronization function
- Low-level signaling function
- UWB ranging, positioning and localization function
- Spectrum resource management function
- Function of transmitting/receiving packets through a physical medium

### (2) MAC layer

The MAC layer 120 provides an interface between the higher layer 130 and the PHY layer 120.

In an embodiment, the MAC layer 120 may provide the following two services:
- MAC data service: a service for enabling transmission/reception of a MAC protocol data unit (PDU) through the PHY
- MAC management service: a service for interfacing to a MAC sublayer management entity (MLME) service access point (SAP) (MLME-SAP)

In an embodiment, MAC layer 120 may support at least one of the following functions:
- Device discovery and connection configuration function
- Channel access function (physical channel (for example, NB channel/UWB channel/OOB channel access function)
- Synchronization function
- Interference mitigation function based on energy detection
- NB signaling-related function
- Guaranteed timeslot (GTS) management function
- Frame delivery function
- UWB ranging function
- PHY parameter change notification function
- Security features

### (3) Higher layer

The higher layer 130 may include a network layer configured to provide functions such as network configuration and message routing, and/or an application layer configured to provide device-intended functions. In an embodiment, the application layer may be a UWB-enabled application layer for providing a UWB service.

FIG. 2 illustrates a communication system including multiple electronic devices according to an embodiment of the disclosure.

Referring to FIG. 2, the communication system 200 may include a first electronic device 210 and a second electronic device 220. In an embodiment, the first electronic device 210 and/or the second electronic device 220 may be the electronic device 100 in FIG. 1.

The first electronic device 210 may communicate with the second electronic device 220 for device discovery, connection configuration, ranging (for example, UWB ranging), data communication, and/or other purposes.

The first electronic device 210 may communicate with the second electronic device 220 by using a preconfigured communication scheme (technology). For example, the first electronic device 210 may perform wireless communication with the second electronic device 220 by using a UWB communication scheme, an NB communication scheme, and/or an OOB communication scheme.

In the disclosure, the UWB communication scheme may perform communication by using at least one of candidate UWB channels allocated for WB communication. An example of candidate UWB channels allocated for UWB communication may be as in Table 1 below:

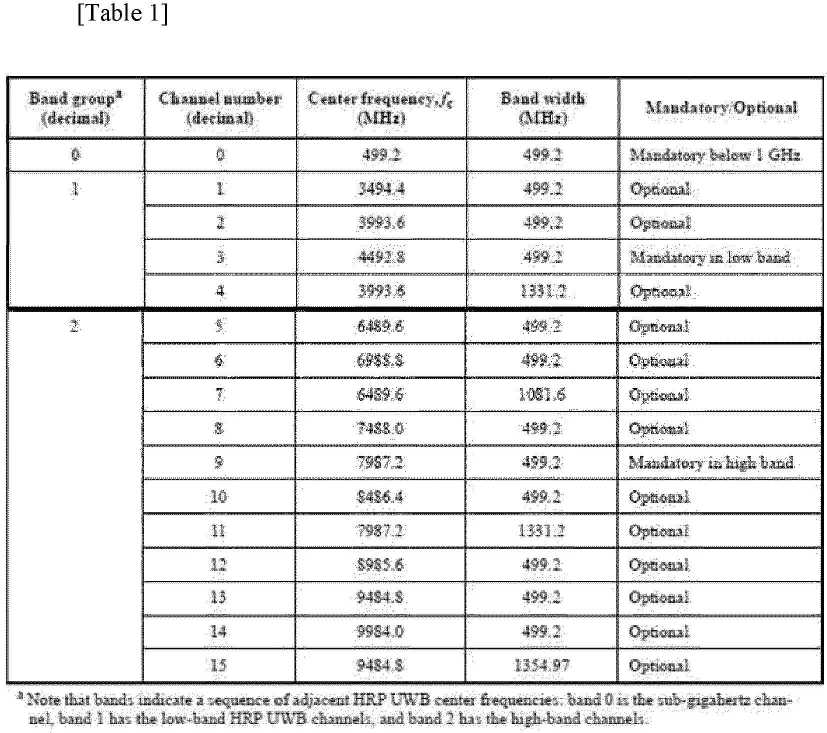

In an embodiment, at least one of the channels in Table 1 may be assigned to a UWB channel supported by UWB transceivers 130b and 230b. For example, channel numbers 5 and/or 9 in Table 1 may be assigned to UWB channels.

NB communication may support at least one NB channel having a narrower bandwidth than the UWB channel.

In an embodiment, the NB channel may be a subchannel of one of candidate UWB channels allocated for UWB communication. An example of candidate UWB channels allocated for UWB communication may be as in Table 1 above.

In another embodiment, the NB channel may be a channel that uses a specific bandwidth of another available band (for example, some of Industrial, Scientific and Medical (ISM) bands, and the like).

Meanwhile, as in Table 1 above, candidate UWB channels mainly have a bandwidth of 500 MHz or higher. Therefore, using this without modification is disadvantageous to the power spectral density (energy detection), and it may thus be necessary to divide the channel into multiple sub-channels (NB channels) and then use the same. For example, the NB channel may need to be used for device discovery (or advertisement) and/or connection configuration.

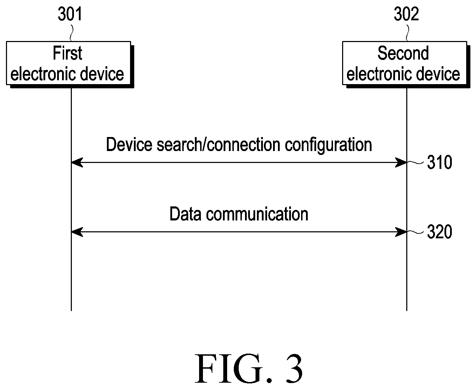

FIG. 3 illustrates a method in which multiple electronic devices perform communication according to an embodiment of the disclosure.

The first electronic device 301 and the second electronic device 302 in FIG. 3 may be the electronic devices in FIG. 1 or FIG. 2, for example.

Referring to FIG. 3, the first electronic device 301 and the second electronic device 302 may perform a device search/connection configuration procedure 310 and a data communication procedure 320. The device search/connection configuration procedure 310 and data communication procedure 320 may be managed or controlled by the MAC layer (entity) of the electronic devices.

### (1) Device search/connection configuration procedure

In the disclosure, the device search/connection configuration procedure 310 may be a preliminary procedure performed before the data communication procedure 320. In an embodiment, the device search/connection configuration procedure 310 may be performed through OOB communication (channel), NB communication (channel), and/or UWB communication (channel).

The device search/connection configuration procedure 310 may include at least one of the following operations:
- Device search operation: an operation in which an electronic device searches for (discovers) another UWB device. The device search operation may include an advertisement message transmitting/receiving operation. In this disclosure, the device search operation may be referred to as a discovery operation or an advertising operation.
- Connection configuration operation: an operation in which two electronic devices configure a connection. The connection configuration operation may include an operation of transmitting/receiving a connection request message and a connection confirmation message. The connection (channel) configured through the connection configuration operation may be used to configure and control a UWB session for data communication. For example, through a secure channel configured through a connection configuration operation, parameters for configuring a UWB session (for example, a UWB performance parameter (controllee performance parameter), a UWB configuration parameter, and a session key-related parameter) may be negotiated between two electronic devices.

### (2) Data communication procedure

In the disclosure, the data communication procedure 320 may be a procedure of transmitting/receiving data by using UWB communication. In an embodiment, the data communication procedure may be performed by using UWB communication or NB communication.

The data communication procedure 320 may include at least one of the following operations:
- UWB ranging operation: an operation in which an electronic device performs UWB ranging with another electronic device in a preconfigured UWB ranging scheme (for example, OWR, SS-TWR, or DS-TWR scheme). In an embodiment, the UWB ranging operation may include a ToF measurement operation and/or an AoA measurement operation.
- Transaction operation: an operation in which an electronic device exchanges service data with another electronic device.

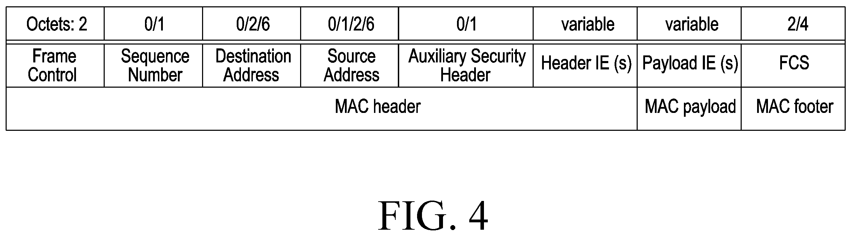

FIG. 4 illustrates the structure of a UWB MAC frame according to an embodiment of the disclosure.

In the embodiment in FIG. 4, the UWB MAC frame may follow the structure of the MAC frame according to IEEE 802.15.4z, for example. In the disclosure, a UWB MAC frame may be abbreviated as a MAC frame or a frame. In an embodiment, the UWB MAC frame may be used to transfer UWB data (for example, UWB messages, ranging messages, control information, service data, application data, transaction data, and the like).

Referring to FIG. 4, the UWB MAC frame may include a MAC header (MHR), a MAC payload, and/or a MAC footer (MFR).

### (1) MAC header

The MAC header may include a frame control field, a sequence number field, a destination address field, a source address field, an auxiliary security header field, and/or at least one header IE field. According to an embodiment, some fields may not be included in the MAC header.

In an embodiment, the frame control field may include a frame type field, a security enabled field, a frame pending field, an AR field, a PAN ID compression field, a sequence number suppression field, an IE present field, a destination addressing mode field, a frame version field, and/or a source addressing mode field. Descriptions of respective fields are as follows:

The frame type field may indicate the frame type. In an embodiment, the frame type may include a data type and/or a multipurpose type.

The security enabled field may indicate whether the auxiliary security header field exists or not. The auxiliary security header field may include information required for security processing.

The frame pending field may indicate whether a device that transmits a frame has more data for the recipient or not. That is, the frame pending field may indicate whether there is a pending frame for the recipient.

The AR field may indicate whether a frame reception acknowledgment is requested by the recipient.

The PAN ID compression field may indicate whether the PAN ID field exists.

The sequence number suppression field may indicate whether the sequence number field exists. The sequence number field may indicate a sequence identifier regarding the frame.

The IE present field may indicate whether the header IE field and the payload IE field are included in the frame.

The destination addressing mode field may indicate whether the destination address field includes a short address (for example, 16 bits) or an extended address (for example, 64 bits). The destination address field may indicate the frame recipient's address.

The frame version field may indicate the version of the frame. For example, the frame version field may be configured to have a value indicating IEEE std 802.15.4z-2020.

The source addressing mode field may indicate whether the source address field exists or not and, in case that the source address field exists, may indicate whether the source address field includes a short address (for example, 16 bits) or an extended address (for example, 64 bits). The source address field may indicate the frame originator's address.

### (2) MAC payload

The MAC payload may include at least one payload IE field. In an embodiment, the payload IE field may include a vendor specific nested IE. In an embodiment, the payload IE field may include a payload IE field of a UWB message or a control message.

### (3) MAC footer

The MAC footer may include an FCS field. The FCS field may include a 16-bit CRC or a 32-bit CRC.

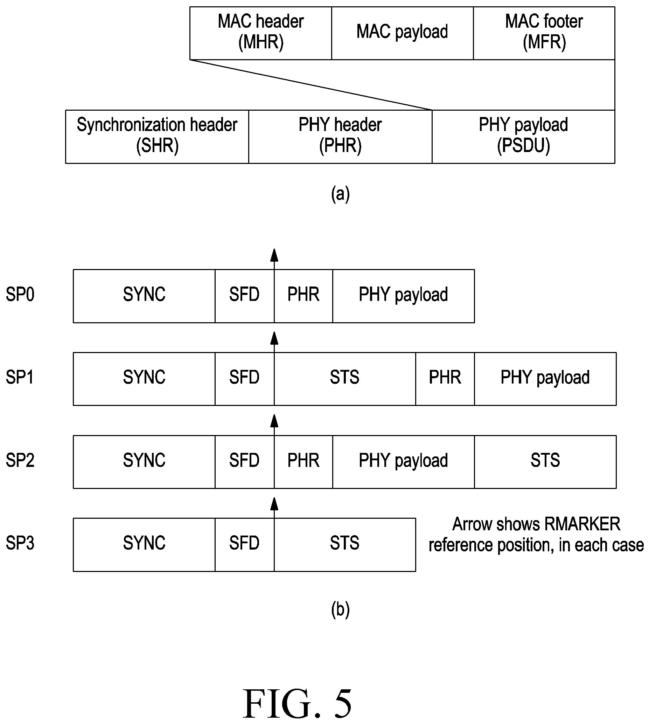

FIG. 5 illustrates the structure of a UWB PHY packet according to an embodiment of the disclosure.

FIG. 5A illustrates an exemplary structure of a UWB PHY packet having no STS packet configurations applied thereto, and FIG. 5B illustrates an exemplary structure of a UWB PHY packet having STS packet configurations applied thereto. In the disclosure, a UWB PHY packet may be referred to as a PHY packet, a PHY PDU (PPDU), or a frame.

Referring to FIG. 5A, the PPDU may include a synchronization header (SHR), a PHY header (PHR), and a PHY payload (PSDU). The PSDU may include a MAC frame, and as in FIG. 4, the MAC frame may include a MAC header (MHR), a MAC payload, and/or a MAC footer (MFR). In the disclosure, the synchronization header part may be referred to as a preamble, and the part including the PHY header and PHY payload may be referred to as a data part.

The synchronization header is used for synchronization for signal reception and may include a SYNC field and a start-of-frame delimiter (SFD).

The SYNC field may include multiple preamble symbols used for synchronization between transmitting/receiving devices. The preamble symbols may be configured through one of predefined preamble codes.

The SFD field may indicate the end of the SHR and the start of the data field.

The PHY header may provide information regarding the configuration of the PHY payload. For example, the PHY header may include information regarding the length of the PSDU, information indicating whether the current frame is an RFRAME, and the like.

Meanwhile, the PHY layer of the UWB device may include an optional mode for providing a reduced on-air time for a high-density/low-power operation. In this case, the UWB PHY packet may include a ciphered sequence (that is, STS) for increasing the integrity and accuracy of the ranging measurement timestamp. The STS may be included in the STS field of the UWB PHY packet and may be used for security ranging.

Referring to FIG. 5B, in case that the STS packet (SP) configuration is 0 (SP0), the STS field is not included in the PPDU (SP0 packet). In case that the SP configuration is 1 (SP1), the STS field is located immediately after the start of frame delimiter (SFD) field and before the PHR field (SP1 packet). In case that the SP configuration is 2 (SP2), the STS field is located after the PHY payload (SP2 packet). In case that the SP configuration is 3 (SP3), the STS field is located immediately after the SFD field, and the PPDU does not include the PHR and data fields (PHY payload) (SP3 packet). That is, in the case of SP3, the PPDU does not include PHR and PHY payloads.

In the embodiment in FIG. 5B, each UWB PHY packet may include an RMARKER for defining a reference time, and the RMARKER may be used to acquire the transmission time, reception time, and/or time interval of the ranging message (frame) in the UWB ranging procedure.

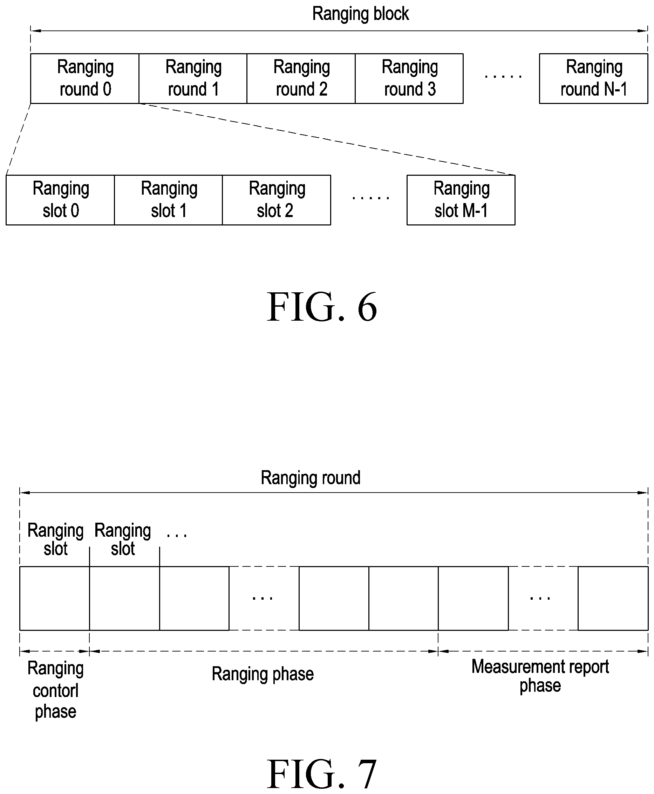

FIG. 6 illustrates an example of the structure of a ranging block and a round used for UWB ranging according to an embodiment of the disclosure.

In the disclosure, a ranging block refers to a time period for ranging. A ranging round may be a period of sufficient duration to complete one entire range-measurement cycle (ranging cycle) involving a set of UWB devices that participate in a ranging exchange. A ranging slot may be a period of sufficient duration to transmit at least one ranging frame (RFRAME) (for example, ranging initiation/response/final messages, and the like).

As in FIG. 6, one ranging block may include at least one ranging round, and each ranging round may include at least one ranging slot.

Meanwhile, in case that the ranging mode is a block-based mode, the mean time between consecutive ranging rounds may be a constant. Alternatively, in case that the ranging mode is an interval-based mode, the time between consecutive ranging rounds may be changed dynamically. That is, the interval-based mode may adopt a time structure having an adaptive spacing.

The number and duration of slots included in a ranging round may be changed between ranging rounds.

In the disclosure, a ranging block, a ranging round, and a ranging slot may be abbreviated as a block, a round, and a slot.

FIG. 7 illustrates an example of the structure of a ranging round used for UWB ranging according to an embodiment of the disclosure.

As in FIG. 7, one ranging round may include multiple ranging slots. Within a ranging round, a ranging control phase (RCP), a ranging phase (RP), and a measurement report phase (MRP) may be performed.

The ranging control phase (RCP) may be a phase in which a controller transmits a ranging control message (RCM) within the ranging round. The ranging control message (RCM) may be transmitted by the controller in the first slot (for example, slot 0) of the ranging round in order to configure ranging parameters.

The ranging phase (RP) may be a phase in which messages for UWB ranging are transmitted/received within the ranging round. The ranging phase (RP) may include at least one of a ranging initiation phase (RIP), a ranging response phase (RRP), and a ranging final phase (RFP).

As used herein, the ranging initiation phase (RIP) may be a phase in which at least one initiator transmits at least one ranging initiation message, the ranging response phase (RRP) may be a phase in which at least one responder transmits at least one response message to the initiator, and the ranging final phase (RFP) may be a phase in which the initiator transmits at least one ranging final message to at least one responder.

The measurement report phase (MRP) may be a phase in which ranging measurement and related service information is exchanged within the ranging round.

According to an embodiment, the ranging control phase (RCP) may be performed in the first ranging slot within the ranging round. According to an embodiment, the ranging control phase may be performed in at least one ranging slot.

According to an embodiment, the ranging phase (RP) may be performed in ranging slots ranging from the second ranging slot to the K^{th} ranging slot (K is a natural number equal to or larger than 3) within the ranging round. According to an embodiment, the ranging phase may be performed in at least one ranging slot.

According to an embodiment, the measurement report phase (MRP) may be performed in ranging slots ranting from the (K+1)^{th} ranging slot to the L^{th} ranging slot (L is a natural number equal to or larger than 5) within the ranging round. According to an embodiment, the measurement report phase may be performed in at least one ranging slot.

Meanwhile, a UWB device that performs UWB ranging may occupy at least one ranging slot and transmit a UWB packet. According to an embodiment, ranging slot allocation information may be included in a ranging control message (RCM) transmitted in the ranging control phase (RCP).

In order to secure the packet processing time and to avoid interference, a ranging slot may have a length implemented to be larger than the packet length. The transmission timepoint within the ranging slot is basically the slot starting timepoint, but the transmission timepoint within the ranging slot may be adjusted through an offset.

According to an embodiment, the ranging control message (RCM) transmitted in the ranging control phase (RCP) may include a ranging round (RR) IE. According to an embodiment, the ranging control message (RCM) including a RR IE may be transmitted at the starting part of a ranging slot within the first ranging round of a ranging message exchange.

The RR IE may be used to signal ranging round information. According to an embodiment, the RR IE may include information regarding the current ranging round (for example, the ranging round in the current ranging block i) and/or the next ranging round (for example, the ranging round in the next ranging block i+1).

According to an embodiment, the RR IE may be configured in a content field format as in Table 2. For example, the RR IE may include a ranging block index field, a hopping mode field, a round index field, and a transmission offset field.

**[Table 2]**

| **Octets: 2** | **Bits: 0** | **1-15** | **Octets: 2** |
|---|---|---|---|
| Ranging Block Index | Hopping Mode | Round Index | Transmission Offset |

Wherein the ranging block index field may designate the index of the ranging block, and the hopping mode field may designate the hop mode regarding the ranging block (for example, 0 means no hopping, and 1 means hopping).

The round index field may designate the ranging round index regarding the ranging block, and the transmission offset field may designate the transmission offset value of the ranging round in the ranging block. According to an embodiment, the transmission offset field may be a value obtained by subtracting the packet duration from the ranging slot duration.

According to an embodiment, the ranging control message (RCM) transmitted in the ranging control phase (RCP) may include a ranging device management (RDM) IE. The RDM IE may allocate ranging slots and device roles (for example, initiators or responders) in the ranging round.

According to an embodiment, during time-scheduled ranging, the controller may use the RDM IE in order to select participating ranging devices, to designate the role of the device as initiators or responders, and to allocate time slots for the devices.

According to an embodiment, the RDM IE may be configured in a content field format as in Table 3. For example, the RDM IE may include an SIU field, an address size field, an RDM list length field, and an RDM list field.

**[Table 3]**

| **Bits: 0** | **1** | **2-7** | **Octets: variable** |
|---|---|---|---|
| SIU | Address Size | RDM List Length | RDM List |

wherein Here, the SIU field may indicate whether the slot index field of the RDM list element is used or not (for example, in case that the SIU field is 1, the slot index field is used).

The address size field may specify the size of the address used in the RDM list field. For example, if the address size field is "0," all addresses of the RDM list element may be short addresses, and if the address size field is "1," all addresses may be extended addresses.

The RDM list length field may indicate the number of elements in the RDM list field.

According to an embodiment, the RDM list field may be configured in an element format as in Table 4. For example, the RDM list field may include a ranging role field, a ranging slot index field, and an address field.

**[Table 4]**

| **Bits: 0** | **1-7** | **Octets: 2/8** |
|---|---|---|
| Ranging Role | Ranging Slot Index | Address |

wherein the ranging role field may designate whether the selected device is an initiator or a responder. The ranging slot index field may be used to assign a slot index to a device if the slot index field of the RDM list element is used (for example, in case that the SIU field is "1").

The address field may be used to identify each participating device. According to an embodiment, the size of the address field may be designated by the address size field in the RDM IE.

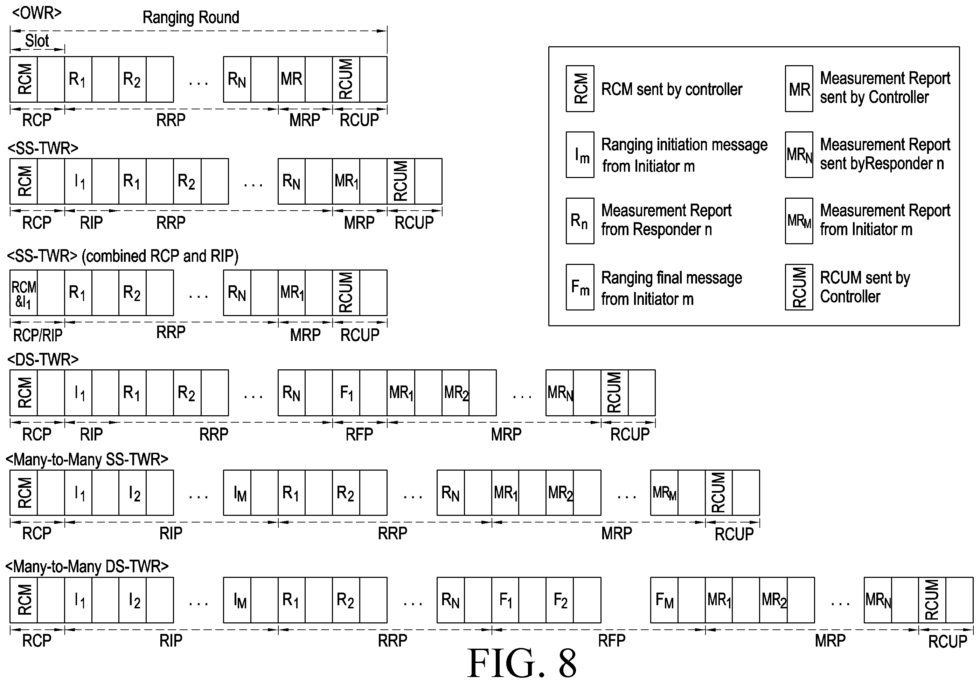

FIG. 8 illustrates a ranging message exchange procedure according to a ranging scheme according to an embodiment of the disclosure.

The embodiment in FIG. 8 illustrates operations of exchanging messages for ranging in one ranging cycle (ranging round) according to a ranging scheme (type). The scheme (type) of ranging used may be indicated by an RCM. In an embodiment, the RCM may be transmitted in the first slot of the corresponding ranging round.

### <OWR>

Referring to FIG. 8A, the ranging procedure (OWR procedure) using the OWR scheme may include at least one phase for exchanging ranging messages. In an embodiment, the OWR procedure may include a ranging control phase (RCP), a ranging initiation phase (RIP), a ranging response phase (RRP), a ranging final Phase (RFP), a measurement report phase (MRP), and/or a ranging control update phase (RCUP). Descriptions of respective phases are as follows:

Ranging control phase (RCP): a phase in which the controller device transmits a ranging control message (RCM). The RCM of the OWR procedure may also be referred to as a poll message.

Ranging response phase (RRP): a phase in which responder device(s) transmits a ranging response message (RRM) to the initiator device.

Measurement report phase (MRP): a phase in which devices participating in ranging exchange ranging measurement and related service information through a measurement report (MR).

Ranging control update phase (RCUP): a phase in which the controller device transmits a ranging control update message (RCUM). If present, the RCUP may be the last slot of the ranging round set designated by the RCM.

### <SS-TWR>

Referring to FIG. 8B and FIG. 8C, the ranging procedure that uses the TWR scheme (TWR procedure) may include at least one phase for exchanging ranging messages.

Referring to FIG. 8B, the TWR procedure may include a ranging control phase (RCP), a ranging initiation phase (RIP), a ranging response phase (RRP), a measurement report phase (MRP) and/or a ranging control update phase (RCUP).

Description of respective phases are as follows:
Ranging control phase (RCP): a phase in which the controller device transmits a ranging control message (RCM).

Ranging initiation phase (RIP): a phase in which the initiator device(s) transmits a ranging initiation message (RIM) to responder device(s).

Ranging response phase (RRP): a phase in which the responder device(s) transmits a ranging response message (RRM) to the initiator device.

Measurement report phase (MRP): a phase in which devices participating in ranging exchange ranging measurement and related service information through a measurement report (MR).

Ranging control update step (RCUP): a phase in which the controller device transmits a ranging control update message (RCUM). If present, the RCUP may be the last slot in the ranging round set designated by the RCM.

A phase including the RIP and RRP may be referred to as a ranging phase (RP).

Meanwhile, as in the embodiment in FIG. 8C, in the SS-TWR procedure, the RCP and RIP may be combined into one phase. For example, in case that one electronic device performs both the role of an initiator device and the role of a controller device, the RCP and RIP may be combined into one phase. In this case, in the merged phase, one ranging message including all information included in the RCM and RIM may be transmitted.

### <DS-TWR>

Referring to FIG. 8D, the ranging procedure (TWR procedure) that uses the TWR scheme may include at least one phase for exchanging ranging messages.

Referring to FIG. 8D, the TWR procedure may include a ranging control phase (RCP), a ranging initiation phase (RIP), a ranging response phase (RRP), a ranging final phase (RFP), a measurement report phase (MRP), and/or a ranging control update phase (RCUP).

Description of respective phases are as follows.

Ranging control phase (RCP): a phase in which the controller device transmits a ranging control message (RCM).

Ranging initiation phase (RIP): a phase in which the initiator device(s) transmits a ranging initiation message (RIM) to responder device(s).

Ranging response phase (RRP): a phase in which the responder device(s) transmits a ranging response message (RRM) to the initiator device.

Ranging final phase (RFP): a phase in which the initiator device transmits a ranging final message (RFM) to the responder device(s).

Measurement report phase (MRP): a phase in which devices participating in ranging exchange ranging measurement and related service information through a measurement report (MR).

Ranging control update phase (RCUP): a phase in which the controller device transmits a ranging control update message (RCUM). If present, the RCUP may be the last slot of the ranging round set designated by the RCM.

A phase including the RIP, RRP, and RFP may be referred to as a ranging phase (RP).

Meanwhile, although not illustrated, in the DS-TWR procedure, the RCP and RIP may be combined into one phase. For example, in case that one electronic device performs both the role of an initiator device and the role of a controller device, the RCP and RIP may be combined into one phase. In this case, in the combined phase, one ranging message including all information included in the RCM and RIM may be transmitted.

### <Many-to-many SS-TWR/many-to-many DS-TWR>

Referring to FIG. 8E and FIG. 8F, SS-TWR and DS-TWR may be performed between multiple initiators and multiple responders. In this case, unlike FIG. 8B to FIG. 8D, the RIP may include ranging slots, the number of which corresponds to the multiple initiators, for RIM transmission by multiple initiators. In an embodiment, scheduling of ranging slots used by respective initiators to transmit the RIM thereof may be directed by an RCM in the RIP.

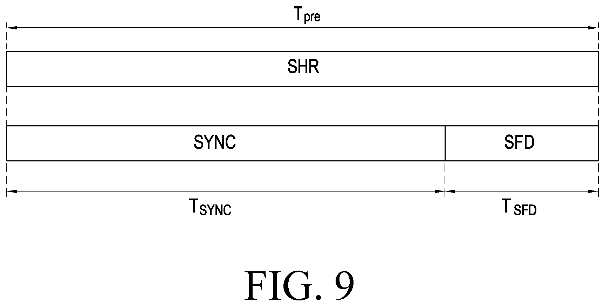

FIG. 9 illustrates the structure of a synchronization header (SHR) used for UWB ranging according to an embodiment of the disclosure.

The synchronization header (SHR) illustrated in FIG. 9 may identical or substantially identical to the synchronization header (SHR) illustrated in FIG. 5A. The SYNC field and SFD illustrated in FIG. 9 may identical or substantially identical to the SYNC field and SFD illustrated in FIG. 5B.

Referring to FIG. 9, the time for which the synchronization header (SHR) is transmitted may be configured to be Tₚᵣₑ, the time for which the SYNC field is transmitted may be configured to be T_{SYNC}, and the time for which the SFD is transmitted may be configured to be T_{SFD}.

The SYNC field may be configured by a known code which UWB devices know with each other, and may be used to synchronize the reception timepoint of UWB devices. According to an embodiment, the SYNC field may be configured based on a ternary code. According to an embodiment, respective channels may use different codes when configuring the SYNC field, and different code indices may be assigned to respective codes.

According to an embodiment, the SYNC field may be configured by length 31 ternary codes as in Table 5. For example, a different code index may be assigned to each code sequence, and a UWB channel number may be preconfigured for each code sequence.

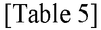

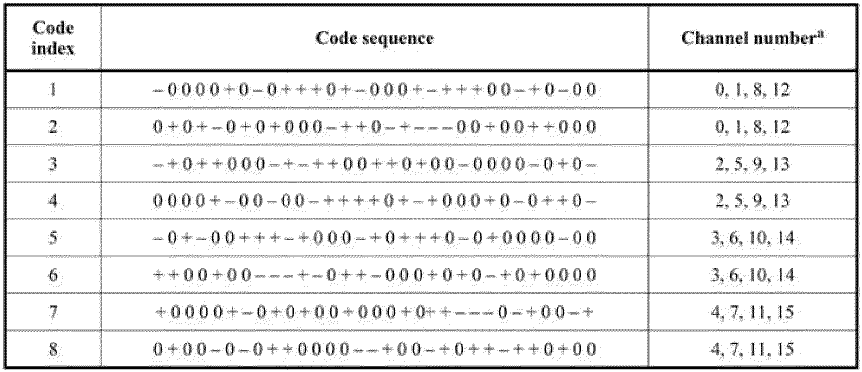

According to an embodiment, the SYNC field may be configured by length 127 ternary codes as in Table 6.

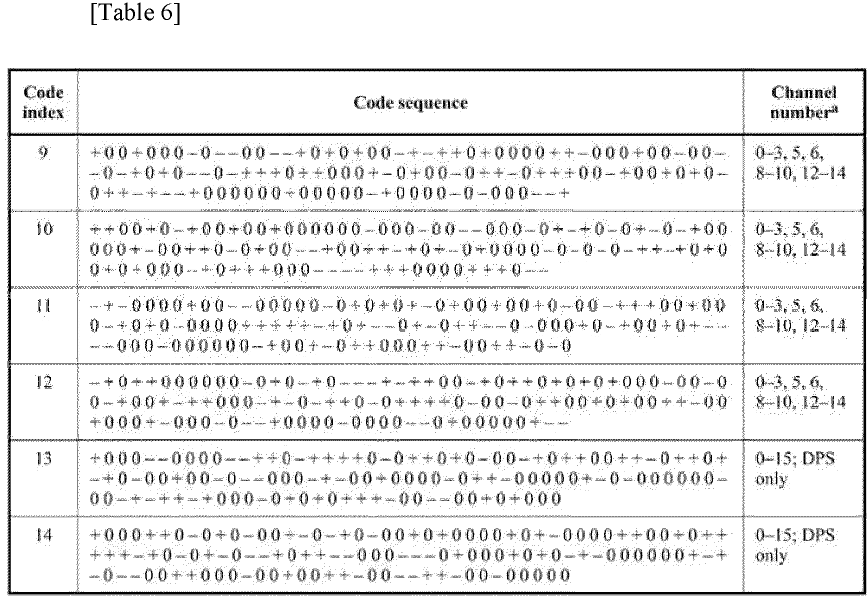

### [Embodiment in which multiple packets are transmitted in one slot]

Meanwhile, UWB devices that perform ranging may occupy ranging slots to as to transmit UWB packets, and only one UWB device per one ranging slot may be able to transmit packets. However, if only one UWB device transmits packets per one ranging slot, UWB devices that receive packets need to secure a long RX time, and this may increase power consumption.

The UWB has a very short transmission time compared with other wireless communication technologies, and TX power consumption is accordingly low, but RX power consumption is substantial. In consideration of the characteristics of electronic devices that use multiple wireless communication technologies, RX power consumption may be a burden when operating the UWB, and a scheme for reducing power consumption by minimizing/optimizing the RX time is thus necessary. In addition, there is a need for a scheme in which, when multiple electronic devices are used, using limited time resources are efficiently used for applications that are sensitive to delay.

A method is proposed such that multiple UWB devices transmit multiple packets in one ranging slot for efficient distribution of power consumption and time resources by minimizing/optimizing the RX time of UWB devices.

According to an embodiment, multiple UWB devices may transmit multiple packets in one ranging slot a through time division, code division, or STS parallel transmission scheme.

In the disclosure, the time division refers to a scheme in which multiple UWB devices transmit packets at different timepoints (that is, by using mini-slots) within one ranging slot. In addition, the code division refers to a scheme in which multiple UWB devices transmit packets through different codes within one ranging slot. In addition, the STS parallel transmission refers to a scheme in which multiple UWB devices transmit packets through different STSs (STSs configured by different codes) within one ranging slot.

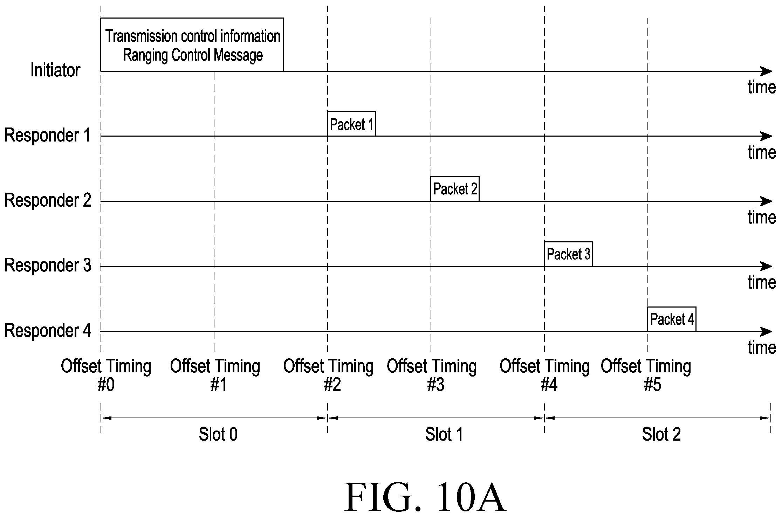

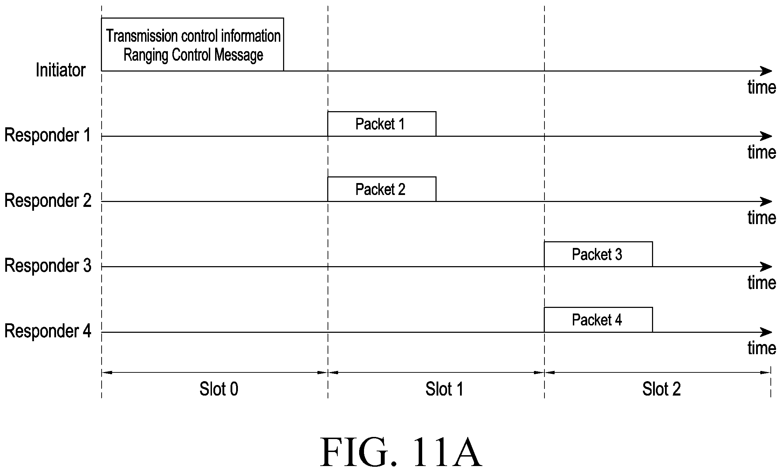

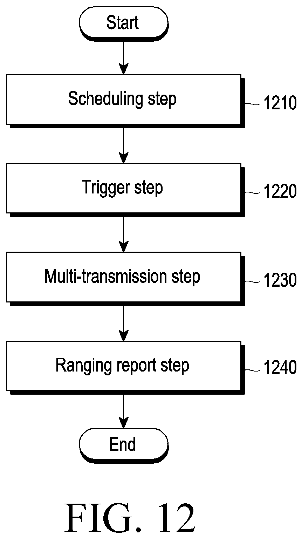

The time division according to an embodiment of the disclosure will be described later in detail with reference to FIG. 10A, the code division will be described later in detail with reference to FIG. 11A, and the STS parallel transmission will be described later in detail with reference to FIG. 12.

According to an embodiment, it may be preconfigured whether to apply the time division or the code division to each of multiple UWB devices in order for the multiple UWB devices to transmit multiple packets in one ranging slot.

According to an embodiment, transmission control information (for example, a ranging control message (RCM)) transmitted on a narrowband or UWB may include an indicator for selecting the time division or the code division. For example, in the case of a 1-bit indicator, time division may be configured if the indicator is "1," and the code division may be configured if the indicator is "0."

According to another embodiment, in case that multiple UWB devices are allocated to one ranging slot, the time division or the code division may be configured according to the value of the transmission offset field included in the RR IE in Table 1. For example, in case that multiple UWB devices are allocated to one ranging slot, and in case that the transmission offset field included in the RR IE has a value of "0," the code division may be configured. For example, in case that multiple UWB devices are allocated to one ranging slot, and in case that the transmission offset field included in the RR IE has a value of "1," the time division may be configured.

FIG. 10A is a diagram for describing a packet transmission method by a UWB device according to an embodiment of the disclosure.

In FIG. 10A, the first UWB device may play the role of an initiator, the second UWB device may play the role of a first responder, the third UWB device may play the role of a second responder, the fourth UWB device may play the role of a third responder, and the fifth UWB device may play the role of a fourth responder.

Although the first UWB device is illustrated in FIG. 10A as playing the role of an initiator that transmits control information (that is, the first UWB device plays the role of a controller and that of an initiator), the first UWB device may play the role of a controller that transmits control information, and another UWB device may play the role of an initiator that transmits a ranging initiation message.

Although five UWB devices are illustrated in FIG. 10A as playing the role of initiators or responders for convenience of explanation, the technical idea of the disclosure is not limited thereto, and the number of UWB devices that play the role of initiators or responders may variously implemented.

Referring to FIG. 10A, one ranging round may include a first slot (slot 0), a second slot (slot 1), and a third slot (slot 2). The first UWB device (initiator) may transmit transmission control information (for example, UWB ranging control message (RCM)) through the UWB or narrowband at the starting timepoint of the first slot (slot 0). The transmission offset of the transmission control information (for example, UWB ranging control message (RCM)) may be configured to be "Offset Timing #0."

In response to the transmission control information (for example, UWB ranging control message (RCM)), the second UWB device (responder1) may transmit a first packet (packet 1) at the starting timepoint of the second slot (slot 1). The transmission offset of the first packet may be configured to be "Offset Timing #2" in the second slot (slot 1).

The first packet may be a packet including a fragment (UWB fragment/MMS fragment) for MMS UWB (or NBA-MMS UWB), a packet including a synchronization header (SHR), a packet including a SYNC field (that is, a preamble) in the synchronization header, a packet including an STS, an SP3 type packet (SP configuration 3) packet including a synchronization header and an STS, or a packet including a preamble and an STS. In an embodiment, the first packet may be used for UWB ranging. The MMS fragment may include a ranging sequence fragment (RSF) or a ranging integrity fragment (RIF), but is not limited thereto.

In response to the transmission control information (for example, UWB ranging control message (RCM)), the third UWB device (responder2) may transmit a second packet (packet2) at a middle timepoint of the second slot (slot 1). The transmission offset of the second packet may be configured to be "Offset Timing #3" in the second slot (slot 1).

The second packet may be a packet including a fragment (MMS fragment) for MMS UWB (or NBA-MMS UWB), a packet including a synchronization header (SHR), a packet including an STS, a packet including a SYNC field (that is, a preamble) in the synchronization header, an SP3 type packet (SP configuration 3) packet including a synchronization header and an STS, or a packet including a preamble and an STS. In an embodiment, the second packet may be used for UWB ranging.

In an embodiment, multiple packets transmitted in the same slot (or the same round) may have the same format. For example, in case that the first packet has a packet format including an MMS fragment, the second packet may also have a packet format including an MMS fragment. In an embodiment, in case that the first packet and the second packet have a packet format including an STS, the STS included in the first packet may be different from the STS included in the second packet.

The second UWB device (responder1) and the third UWB device (responder2) may transmit a first packet and a second packet, respectively, with different transmission offsets in the second slot (slot 1). According to an embodiment, the transmission offset may be configured to be the transmission offset field in the RR IE in Table 1.

In response to the transmission control information (for example, UWB ranging control message (RCM)), the fourth UWB device (responder3) may transmit a third packet (packet 3) at the starting timepoint of the third slot (slot 2). The transmission offset of the third packet may be configured to be "Offset Timing #4" in the third slot (slot 2).

The third packet may be a packet including a fragment (MMS fragment) for MMS UWB (or NBA-MMS UWB), a packet including a synchronization header (SHR), a packet including an STS, a packet including a SYNC field (that is, a preamble) in the synchronization header, an SP3 type packet (SP configuration 3) packet including a synchronization header and an STS, or a packet including a preamble and an STS. In embodiment, the third packet may be used for UWB ranging.

In response to the transmission control information (for example, UWB ranging control message (RCM)), the fifth UWB device (responder4) may transmit a fourth packet (packet4) at a middle timepoint of the third slot (slot 2). The transmission offset of the fourth packet may be configured to be "Offset Timing #5" in the third slot (slot 2).

The fourth packet may be a packet including a fragment (MMS fragment) for MMS UWB (or NBA-MMS UWB), a packet including a synchronization header (SHR), a packet including an STS, a packet including a SYNC field (that is, a preamble) in the synchronization header, an SP3 type packet (SP configuration 3) packet including a synchronization header and an STS, or a packet including a preamble and an STS. In an embodiment, the fourth packet may be used for UWB ranging.

In an embodiment, multiple packets transmitted in the same slot (or the same round) may have the same format. For example, in case that the third packet has a packet format including an MMS fragment, the fourth packet may also have a packet format including an MMS fragment. In an embodiment, in case that the third packet and the fourth packet have a packet format including an STS, the STS included in the third packet may be different from the STS included in the fourth packet.

The fourth UWB device (responder3) and the fifth UWB device (responder4) may transmit a third packet and a fourth packet, respectively, with different transmission offsets in the third slot (slot 2). According to an embodiment, the transmission offset may be configured to be the transmission offset field in the RR IE in Table 1.

According to an embodiment, the length of mini slots in the ranging slot may be configured differently according to the transmission offset field value in the RR IE in Table 1. According to an embodiment, if the transmission offset field value in the RR IE is configured to be various numbers, the number of mini slots included in the ranging slot may also be implemented variously.

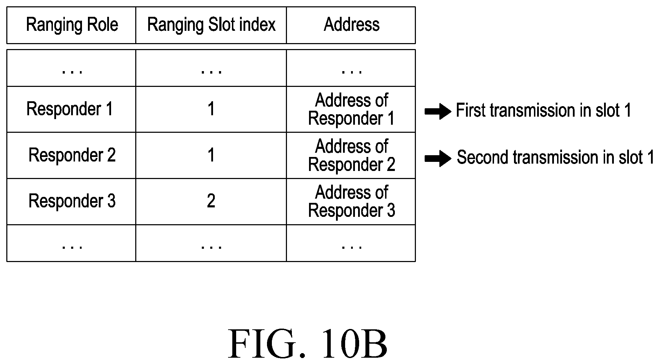

FIG. 10B illustrates an RDM list field in an RDM IE according to an embodiment of the disclosure.

The RDM List field illustrated in FIG. 10B may include a ranging role field, a ranging slot index field, and an address field in the same manner as the RDM list field in Table 4. Respective fields in the RDM list field have been described above with reference to Table 4, and repeated descriptions thereof will be omitted herein.

Referring to FIG. 10B, the RDM list field may allocate multiple UWB devices and multiple device addresses to one ranging slot index. According to an embodiment, multiple UWB devices or multiple device addresses may be configured fewer than the number of mini slots in the ranging slot.

According to an embodiment, UWB devices allocated to the same ranging slot index in the RDM list field may be allocated to respective mini slots according to the order in which the same are included in the RDM List.

Referring to FIG. 10A and FIG. 10B, the same ranging slot index (slot 1) may be allocated to the second UWB device (responder1) and the third UWB device (responder2), a first address (address of responder 1) may be allocated to the second UWB device (responder1), and a second address (address of responder 2) may be allocated to the third UWB device (responder2).

The second UWB device (responder1) and the third UWB device (responder2), which are allocated to the same ranging slot index (slot 1), may transmit packets according to the order in which the same are included in the RDM List. For example, the second UWB device (responder1) may transmit the first packet in the ranging slot index (slot 1), and the third UWB device (responder2) may transmit the packet second in the ranging slot index (slot 1).

FIG. 11A is a diagram for describing a packet transmission method by a UWB device according to another embodiment of the disclosure.

In Figure 11A, the first UWB device may play the role of an initiator, the second UWB device may play the role of a first responder, the third UWB device may play the role of a second responder, the fourth UWB device may play the role of a third responder, and the fifth UWB device may play the role of a fourth responder.

Although the first UWB device is illustrated in FIG. 11A as playing the role of an initiator that transmits control information (that is, the first UWB device plays the role of a controller and that of an initiator), the first UWB device may play the role of a controller that transmits control information, and another UWB device may play the role of an initiator that transmits a ranging initiation message.

Although five UWB devices are illustrated in FIG. 11A as playing the role of initiators or responders for convenience of explanation, the technical idea of the disclosure is not limited thereto, and the number of UWB devices that play the role of initiators or responders may variously implemented.

Referring to FIG. 11A, one ranging round may include a first slot (slot 0), a second slot (slot 1), and a third slot (slot 2). The first UWB device (initiator) may transmit transmission control information (for example, UWB ranging control message (RCM)) through the UWB or narrowband at the starting timepoint of the first slot (slot 0).

The first UWB device (initiator) may allocate ranging slots to the second UWB devices (responder1) to the fifth UWB device (responder4), respectively, and may provide information regarding sequences included in packets. According to an embodiment, multiple responders may perform transmissions in one ranging slot, and sequences may be transmitted orthogonally.

In response to the transmission control information (for example, UWB ranging control message (RCM)), the second UWB device (responder1) may transmit a first packet (packet 1) at a preconfigured timepoint (for example, at the starting timepoint) of the second slot (slot 1).

The first packet may be a packet including a fragment (MMS fragment) for MMS UWB (or NBA-MMS UWB), a packet including a synchronization header (SHR), a packet including a SYNC field (that is, a preamble) in the synchronization header, or a packet including an STS.

In response to transmission control information (for example, UWB ranging control message (RCM)), the third UWB device (responder2) may transmit a second packet (packet 2) at a preconfigured timepoint (for example, at the starting timepoint) of the of the second slot (slot 1).

The second packet may be a packet including a fragment (MMS fragment) for MMS UWB (or NBA-MMS UWB), a packet including a synchronization header (SHR), a packet including a SYNC field (that is, a preamble) in the synchronization header, or a packet including an STS.

In an embodiment, multiple packets transmitted in the same slot (or the same round) may have the same format. For example, in case that the first packet has a packet format including an MMS fragment, the second packet may also have a packet format including an MMS fragment.

In an embodiment, multiple packets transmitted in the same slot may include different sequences. For example, in case that the first packet and the second packet have a packet format including an MMS fragment, the MMS fragment included in the first packet and the MMS fragment included in the second packet may be generated based on different codes (for example, multi-millisecond ranging sequences (MMRSs) having different indices), respectively. For example, in case that the first packet and the second packet have a packet format including a preamble (or SHR), the preamble included in the first packet and the preamble included in the second packet may be generated based on different codes (for example, different ternary codes), respectively.

The second UWB device (responder1) and the third UWB device (responder2) may transmit packets including data of different sequences (for example, sequences orthogonal to each other), respectively, in the second slot (slot 1).

In response to the transmission control information (for example, UWB ranging control message (RCM)), the fourth UWB device (responder3) may transmit a third packet (packet 3) at a preconfigured timepoint (for example, at the starting timepoint) of the third slot (slot 2).

The third packet may be a packet including a fragment (MMS fragment) for MMS UWB (or NBA-MMS UWB), a packet including a synchronization header (SHR), a packet including a SYNC field (that is, a preamble) in the synchronization header, or a packet including an STS.

In response to the transmission control information (for example, UWB ranging control message (RCM)), the fifth UWB device (responder2) may transmit a fourth packet (packet 4) at a preconfigured timepoint (for example, at the starting timepoint) of the third slot (slot 2).

The fourth packet may be a packet including a fragment (MMS fragment) for MMS UWB (or NBA-MMS UWB), a packet including a synchronization header (SHR), a packet including a SYNC field (that is, a preamble) in the synchronization header, or a packet including an STS.

In an embodiment, the third packet and the fourth packet transmitted in the same slot (or the same round) may have the same format. For example, in case that the third packet has a packet format including an MMS fragment, the fourth packet may also have a packet format including an MMS fragment.

In an embodiment, two packets transmitted in the same slot may include different sequences. For example, in case that the third packet and the fourth packet have a packet format including an MMS fragment, the MMS fragment included in the third packet and the MMS fragment included in the fourth packet may be generated based on different codes (for example, multi-millisecond ranging sequences (MMRSs) having different indices). For example, in case that the third packet and the fourth packet have a packet format including a preamble, the preamble included in the third packet and the preamble included in the fourth packet may be generated based on different codes (for example, different ternary codes).

The fourth UWB device (responder3) and the fifth UWB device (responder4) may transmit packets including data of different sequences (for example, sequences orthogonal to each other), respectively, in the third slot (slot 2).

Meanwhile, two packets transmitted in different slots may include the same sequence. For example, the second packet and the third packet transmitted in the same slot may include the same sequence.

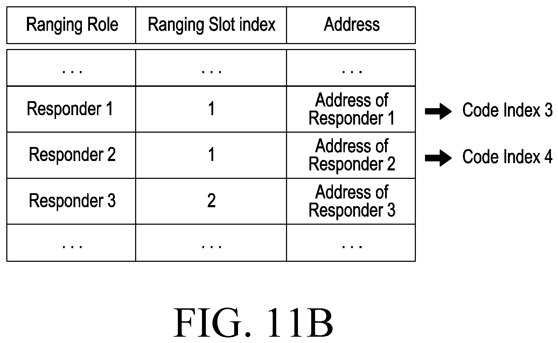

FIG. 11B illustrates an RDM list field in an RDM IE according to another embodiment of the disclosure.

The RDM List field illustrated in FIG. 11B may include a ranging role field, a ranging slot index field, and an address field in the same manner as the RDM list field in Table 4. Respective fields in the RDM list field have been described above with reference to Table 4, and repeated descriptions thereof will be omitted herein.

Referring to FIG. 11B, the RDM list field may allocate multiple UWB devices and multiple device addresses to one ranging slot index. According to an embodiment, multiple UWB devices or multiple device addresses may be configured fewer than the total number of indices (code indices) of a code used to generate a sequence included in a packet.

According to an embodiment, UWB devices allocated to the same ranging slot index in the RDM list field may be allocated to preconfigured code indices, respectively, in the order in which the same are included in the RDM List.

Referring to FIG. 11A and FIG. 11B, the same ranging slot index (slot 1) may be allocated to the second UWB device (responder1) and the third UWB device (responder2), the first address (address of responder 1) may be allocated to the second UWB device (responder1), and the second address (address of responder 2) may be allocated to the third UWB device (responder2).

The second UWB device (responder1) and the third UWB device (responder2), which are allocated to the same ranging slot index (slot 1), may transmit packets based on code indices predetermined in the order in which the same are included in the RDM List.

For example, in the case of a packet format including an MMS fragment, the second UWB device (responder1) which is firstly allocated to the ranging slot index (slot 1) may include data of a sequence generated based on a code (for example, MMRS sequence) having "Code Index 1" in the first packet, and the third UWB device (responder2) which is secondly allocated to the ranging slot index (slot 1) may include data of a sequence generated based on a code (for example, MMRS sequence) having "Code Index 2" in the first packet.

For example, in the case of a packet format including a preamble (or SHR), the second UWB device (responder1) which is firstly allocated to the ranging slot index (slot 1) may include data of a sequence generated based on a code (for example, length 31 ternary code in Table 4) having "Code Index 3" in the first packet, and the third UWB device (responder2) which is secondly allocated to the ranging slot index (slot 1) may include data of a sequence generated based on a code (for example, length 31 ternary code in Table 4) having "Code Index 4" in the first packet.

### [Multi-millisecond (MMS) UWB]

The MMS UWB may be a mode in which multiple fragments/packets are transmitted through the UWB at least at an interval of 1 millisecond (ms) in order to improve the link budget and ToF accuracy. For example, each fragment (or a UWB packet including each fragment) may be multi-transmitted through the UWB at an interval or 1 ms. Such multiple fragments/packets may be used for UWB ranging (for example, SS-TWR). In the disclosure, fragments/packets used for the MMS UWB may be referred to as MMS fragments/packets.

In an embodiment, an MMS fragment/packet may include a ranging sequence fragment (RSF) or a ranging integrity fragment (RIF), but is not limited thereto. In an embodiment, the RSF may be generated based on preconfigured multi-millisecond ranging sequences (MMRSs). In an embodiment, the RIF may be generated based on an STS.

An NB may be used to assist the MMS UWB, and this may be referred to as a narrow band assisted (NBA)-MMS UWB. In the case of the NBA-MMS UWB, synchronization information and/or configuration information for the MMS UWB may be transferred through the NB, not through the UWB. The synchronization information may include information for frequency synchronization and the initial time (or timing) required for the MMS UWB. The NBA-MMS UWB and MMS UWB may be one of multi-transmission modes.

* Hereinafter, a method for supporting a multi-transmission mode/scenario in a slot in case that the MMS UWB (or NBA-MMS UWB) is applied will be described. In an embodiment, an NBA-UWB device and a UWB only device may both support the multi-transmission mode/scenario.

It will be assumed in the following description that the MMS fragment includes an RSF for convenience of description, but the disclosure is not limited thereto. For example, the MMS fragment may include an RIF, or may include other sequences (for example, preambles or SHRs). FIG. 12 illustrates a multi-transmission mode procedure according to an embodiment of the disclosure.

Referring to FIG. 12, the multi-transmission mode procedure may include the following four steps:

### (1) Scheduling step

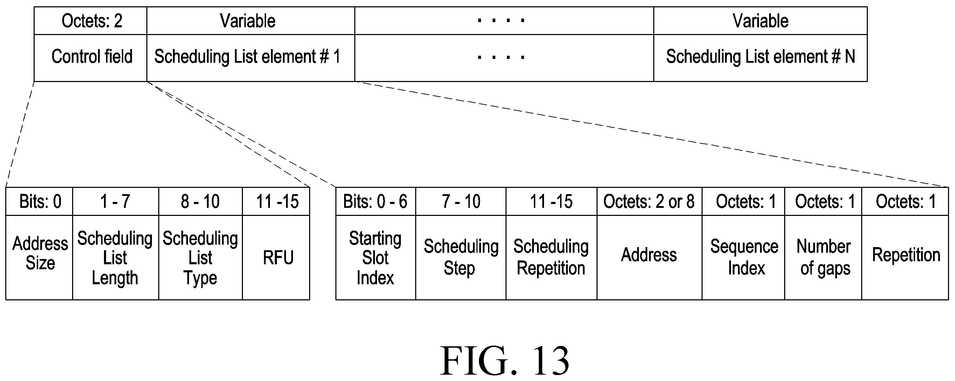

The scheduling step may be a step for scheduling the transmission timing of each device. In an embodiment, scheduling may be performed by an initiator (or a controller). In an embodiment, scheduling may be performed through a scheduling IE (for example, the scheduling IE in FIG. 13) or a control message of the NB or OOB.

### (2) Trigger step

The trigger step may be a step for triggering multi-transmission. In an embodiment, multi-transmission may be triggered by an initiator. For example, multi-transmission may be triggered by transmitting a UWB packet (for example, a packet including a SYNC field and an SFD field) transmitted by the initiator, or an NB poll message.

### (3) Multi-transmission phase

The multi-transmission step may be a step for multi-transmission of a fragment (MMS fragment). In an embodiment, the fragment may include a ranging sequence fragment (RSF), but is not limited thereto. For example, the fragment may include a ranging integrity fragment (RIF) based on an STS, or may include other sequences (for example, preambles or SHRs). In an embodiment, in the multi-transmission step, multi-transmission of a fragment may occur between scheduled responders, but is not limited thereto. For example, in the multi-transmission step, multi-transmission of a fragment, based on contention, may occur.

### (4) Ranging report step

The ranging report step may be a step of transmitting a ranging report. For example, the ranging report step may be a step in which the initiator transmits a ranging report to responder(s). In an embodiment, the ranging report may include a ranging measurement result.

If necessary, the above-described four steps of the multi-transmission mode procedure may be performed in an order different from the above-described order, some steps may be omitted, additional steps may be further included, or multiple steps may be combined into one step. For example, the scheduling step and trigger step may be combined into one step. For example, the ranging report step may be omitted. For example, in case that there is no need to update scheduling information, the scheduling step may be omitted in the corresponding ranging round.

FIG. 13 illustrates an example of a scheduling IE for multiple transmissions according to an embodiment of the disclosure.

Referring to FIG. 13, the scheduling IE may include a control field and at least one scheduling list element.

The control field may include an address size field, a scheduling list length field, and/or a scheduling list type field.

The address size field may indicate the size of the address field. In an embodiment, the size of the address field (or the size of the address included in the address field) may be 2 bytes or 8 bytes.

The scheduling list length field may indicate the number (or length) of scheduling list elements. For example, in case that the scheduling list length field has a value configured to be *N,* the scheduling IE may include as many scheduling list elements as *N,* as illustrated.

The scheduling list type field may indicate the scheduling list type. As used herein, the scheduling list type may refer to the type of the scheduling list element (or data included in the scheduling list element). In an embodiment, the scheduling list type field may be configured to have one of a first value (for example, 0) indicating that the scheduling list type is a bitmap-based type, a second value (for example, 1) indicating that the scheduling list type is a periodic scheduling type, or a third value (for example, 2) indicating that the scheduling list type is a multi-transmission scheduling type. According to the value of this scheduling list type field, the format of data (or field) included in the scheduling list element may vary.

The scheduling list element may include scheduling information regarding the corresponding device (for example, the responder to be scheduled).

In an embodiment, in case that the value of the scheduling list type field is configured to be a third value (for example, 2) indicating that the scheduling list type is a multi-transmission scheduling type (that is, in case that the scheduling list element is for scheduling regarding a multi-transmission mode (for example, MMS UWB mode/NBA-MMS UWB mode)), the scheduling list element may include a starting slot index field, a scheduling step field, a scheduling repetition field, an address field, a sequence index field, a number-of-gaps field, and/or a repetition field. That is, in the case of a scheduling IE for the multi-transmission mode, each scheduling list element may include a starting slot index field, a scheduling step field, a scheduling repetition field, an address field, a sequence index field, a number-of-gaps field, and/or a repetition field.

The address field may provide the address (for example, 2-byte address or 8-byte address) of the device (for example, responder) to which the scheduling information (configuration information) included in the corresponding scheduling list element is applied. In an embodiment, the address may be the MAC address of the device.

The start slot index field may indicate the index of the first transmission slot in a periodic transmission pattern (or multi-transmission pattern). Accordingly, the first ranging slot in which the MMS fragment/packet is transmitted may be identified.

The scheduling step field may indicate the period of the periodic transmission pattern (or multi-transmission pattern) in a slot unit. In an embodiment, the scheduling steps field may be configured to have a value of 4, 8, 16, 32, or 64. Accordingly, the period in which multiple MMS fragments/packets are transmitted may be identified.

The scheduling repetition field may indicate the number of repetitions of the periodic transmission pattern (or multi-transmission pattern) in a slot unit. In an embodiment, the scheduling repetition field may be configured to have a value of 2, 4, 8, 16, or 32. Accordingly, the number of times an MMS fragment/packet is transmitted in the corresponding period may be identified.

The sequence index field, the number-of-gaps field, and the repetition field may be used to allocate MMS fragments to the corresponding device (for example, responder).

The sequence index field may indicate the index of multi-millisecond ranging sequences (MMRS) based on a 16 length-128 complementary set. In other words, the sequence index field may indicate the index of 16 length-128 MMRS sequences based on 16 length-128 complementary sets.

Table 7 illustrates an example of length-128 MMRS sequences.

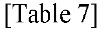

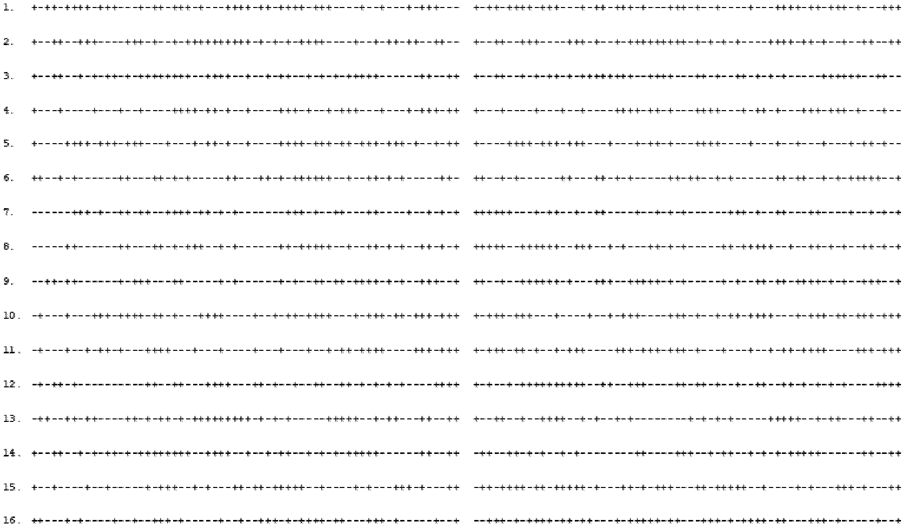

In Table 7, each of the 16 length-128 MMRS sequences may have a separate index. For example, as in Table 7, each MMRS sequence may have an index from 1 to 16, but is not limited thereto.

The number-of-gaps field may indicate the size of the zero gap (part G). In an embodiment, the number-of-gaps field may be configured to have a value from 0 to 64.

As illustrated in Table 7, each MMRS sequence may be divided into part A (left part) and part B (right part) ([A,B]), and each of part A and part B may have a length of 64 bits. In an embodiment, part G may be added between part A and part B and after part B ([A,G,B,G]) in order to generate an MMRS with zero gap(s). In an embodiment, part G may be configured by zeros (for example, 0-64 zeros), the number of which corresponds to the value of the zero gap field.

The repetition field may indicate the repetition number of the MMRS. For example, in case that the repetition field has a value of 2, two MMRSs (for example, MMRS with/without zero gap(s)) may be included in one MMS fragment (for example, RSF).

A device (for example, a responder) that has received a scheduling IE may generate sequence data thereof, which is included in an MMS fragment, by using the sequence index field, the number-of-gaps field, and the repetition field in the scheduling list element of the device, included in the scheduling IE.

In an embodiment, the scheduling IE may be included in a UWB packet, an NB packet, or an OOB packet and then transmitted. For example, the scheduling IE may be included in the MAC payload of a UWB packet, an NB packet, or an OOB packet.

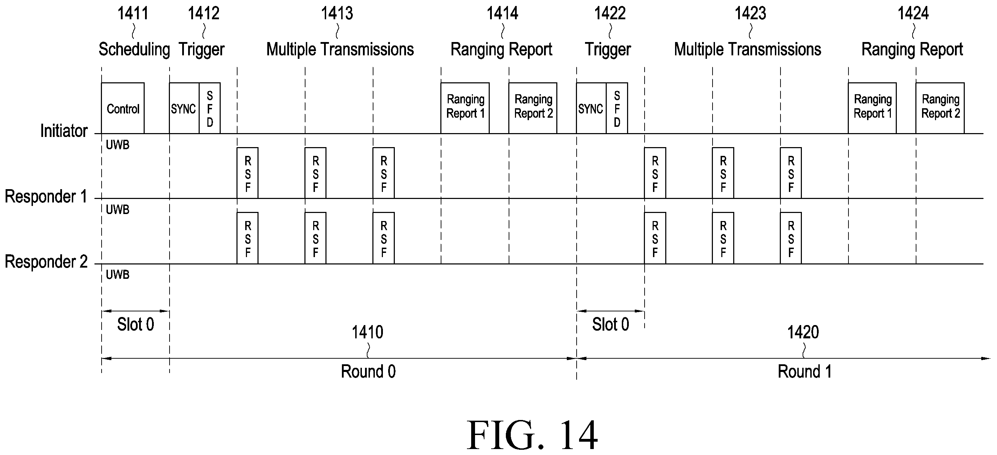

FIG. 14 illustrates an example of a multi-transmission method using the UWB according to an embodiment of the disclosure.

Although the first UWB device is illustrated in FIG. 14 as playing the role of an initiator that transmits control information (that is, the first UWB device plays the role of a controller and that of an initiator), the first UWB device may play the role of a controller that transmits control information, and another UWB device may play the role of an initiator.

Although three UWB devices are illustrated in FIG. 14 as playing the role of initiators or responders for convenience of explanation, the technical idea of the disclosure is not limited thereto, and the number of UWB devices that play the role of initiators or responders may variously implemented.

In the multi-transmission method (UWB multi-transmission method/MMS UWB mode) in FIG. 14, scheduling for multi-transmission may be performed by using a control message/packet (for example, a control message/packet including the scheduling IE in FIG. 13) transmitted through the UWB, or performed through an OOB procedure. In the disclosure, a control message/packet including scheduling information transmitted through a UWB channel may be referred to as a UWB control message/packet.

Referring to FIG. 14, in the scheduling step/operation 1411, the first UWB device (initiator) may transmit a UWB control packet including scheduling information (for example, the scheduling IE in FIG. 13) through the UWB. For example, the initiator may transmit a UWB control packet including a scheduling IE in the first slot (for example, slot index #0 (slot 0)) of the first ranging round (round 0) 1410. In an embodiment, the UWB control packet may be transmitted at the starting timepoint of slot 0.

In the trigger step/operation 1412, the initiator may transmit a packet containing synchronization information (for example, an SYNC field and an SFD field) through the UWB in order to trigger multi-transmission. For example, the initiator may transmit a packet configured by an SYNC field and an SFD field in the second slot of the first ranging round 1410 (for example, in the slot (for example, the second slot (slot index #1 (slot 1))) immediately next to the slot allocated for scheduling). In an embodiment, the packet including the SYNC field and the SFD field may be transmitted at the starting timepoint of slot 1.

In the multi-transmission step/operation 1413, the second UWB device (responder 1) and the third UWB device (responder 2) may transmit multiple fragments (MMS fragments) based on scheduling information included in the UWB control packet. In an embodiment, each MMS fragment/packet may be transmitted at the starting timepoint of the corresponding ranging slot. Each MMS fragment transmitted in the corresponding ranging round by one responder may include the same sequence data.

In an embodiment, the fragments may be RSFs.

In an embodiment, the responder may identify a scheduling list element for the responder in the scheduling IE, and may acquire sequence data to be included in the RSF (for example, MMRS sequence data) by using the sequence index field, the number-of-gaps field, and/or the repetition field included in the scheduling list element. The MMRS sequence data may be sequence data generated based on an MMRS sequence (for example, the MMRS sequence in Table 7).

In an embodiment, the responder may identify a scheduling list element for the responder in the scheduling IE, and may transmit multiple RSFs (or repeatedly transmit the RSF) by using the starting slot index field, the scheduling step field, and/or the scheduling repetition field included in the scheduling list element.

For example, as illustrated, responder 1 may acquire MMRS sequence data (first MMRS sequence data) included in the RSF thereof (first RSF) by using the sequence index field, the number-of-gaps field, and/or the repetition field included in the scheduling list element thereof (first scheduling list element). In addition, responder 1 may repeatedly transmit the first RSF three times during a period corresponding to three slots from the third slot of first ranging round 1410, by using the starting slot index field, the scheduling step field, and/or the scheduling repetition field included in the first scheduling list element.

For example, as illustrated, responder 2 may acquire MMRS sequence data (second MMRS sequence data) included in the RSF thereof (second RSF) by using the sequence index field, the number-of-gaps field, and/or the repetition field included in the scheduling list element thereof (second scheduling list element). In addition, responder 2 may repeatedly transmit the second RSF three times during a period corresponding to three slots from the third slot of first ranging round 1410, by using the starting slot index field, the scheduling step field, and/or the scheduling repetition field included in the second scheduling list element.

As illustrated, MMS fragments (for example, RSFs) of multiple devices (for example, responders) may be transmitted in the same slot (or at the same timepoint). For example, RSFs of multiple responders may be transmitted simultaneously in the same slot (for example, simultaneously at the starting timepoint of the slot). In this case, the first MMRS sequence data included in the first RSF transmitted by responder 1 may be configured differently from the second MMRS sequence data included in the second RSF transmitted by responder 2. For example, the index of the MMRS sequence used to generate the first MMRS sequence data may be configured to have a different value from the index of the MMRS sequence used to generate the second MMRS sequence data. For example, the sequence index field in the scheduling list element for responder 1 in the scheduling IE may be configured to have a different value from the sequence index field in the scheduling list element for responder 2 in the scheduling IE. As a result, even if RSFs are transmitted together by multiple devices in the same slot, respective RSFs have different sequences (or codes), and the device that receives the same may thus accurately acquire the RSF of each device (code division scheme).

In the ranging report step/operation 1414, the initiator may transmit a ranging report to the responder(s) through the UWB. For example, as illustrated, the initiator may transmit a ranging report regarding responder 1 (ranging report 1) to responder 1, and the initiator may transmit a ranging report regarding responder 2 (ranging report 2) to responder 2.

The scheduling step 1411, the trigger step 1412, the multi-transmission step 1413, and the ranging report step 1414 described above may be performed within one ranging round 1410.

Meanwhile, scheduling information (for example, a scheduling IE) may be transmitted only in case that scheduling regarding a device (for example, a responder) is necessary. For example, in case that there is no need to update scheduling information, it may be unnecessary to transmit scheduling information (or a UWB control packet including scheduling information) in the corresponding ranging round. In this case, transmission of the corresponding control packet (or the scheduling step for transmission of the corresponding control packet) may be omitted. For example, as illustrated, in case that it is unnecessary to update the scheduling information transmitted in the first ranging round 1410, transmission of the scheduling information (or the scheduling step) in the second ranging round (round 1) 1420 may be omitted. In this case, the initiator may not perform the scheduling step, and may immediately perform the trigger step 1242 for triggering multiple transmissions in the first slot (for example, slot index #0) of the second ranging round 1420. Thereafter, each responder may perform the multi-transmission step 1423, and the initiator may perform the ranging report step 1424. The operations in the trigger step 1422, the multi-transmission step 1423, and the ranging report step 1424 of the second ranging round 1420 may be identical to the operations in the trigger step 1412, the multi-transmission step 1413, and the ranging report step 1414 of the first ranging round 1410.

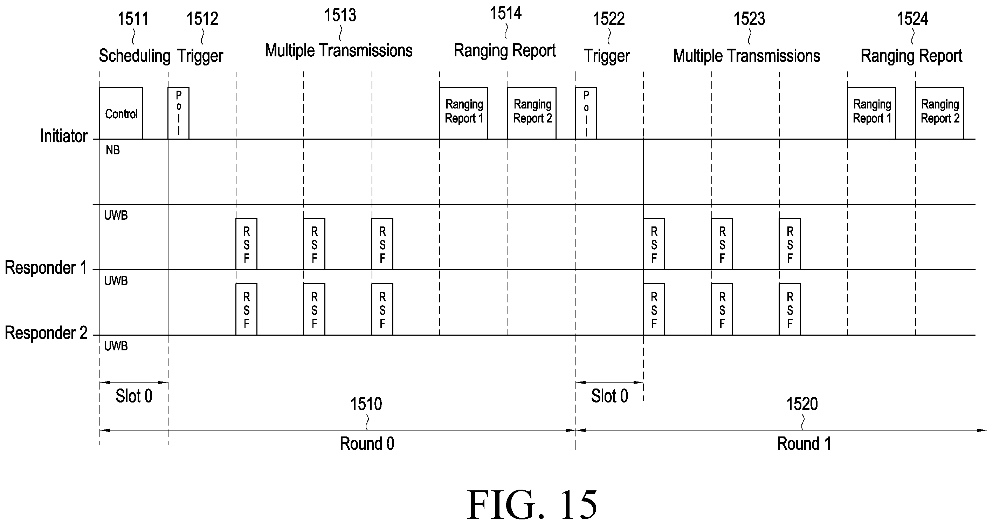

FIG. 15 illustrates an example of a multi-transmission method using an NB assist according to an embodiment of the disclosure.

Although the first UWB device is illustrated in FIG. 15 as playing the role of an initiator that transmits control information (that is, the first UWB device plays the role of a controller and that of an initiator), the first UWB device may play the role of a controller that transmits control information, and another UWB device may play the role of an initiator.

Although three UWB devices are illustrated in FIG. 15 as playing the role of initiators or responders for convenience of explanation, the technical idea of the disclosure is not limited thereto, and the number of UWB devices that play the role of initiators or responders may variously implemented.

Unlike the multi-transmission method in FIG. 14, in the multi-transmission method in FIG. 15 (NBA multi-transmission method/NBA-MMS mode), scheduling for multiple transmissions may be performed by using a control message/packet transmitted through the NB (for example, a control message/packet including the scheduling IE in FIG. 13), or performed through an OOB procedure. In the disclosure, a control message/packet including scheduling information transmitted through an NB channel may be referred to as an NB control message/packet.

Referring to FIG. 15, in the scheduling step/operation 1511, the first UWB device (initiator) may transmit an NB control message including scheduling information (for example, the scheduling IE in FIG. 13) through the NB. For example, the initiator may transmit an NB control message including a scheduling IE in the first slot (for example, slot index #0 (slot 0)) of the first ranging round (round 0) 1510. In an embodiment, the NB control message may be transmitted at the starting timepoint of slot 0.

In trigger step/operation 1412, the initiator may transmit a poll message through the NB in order to trigger multiple transmissions. For example, the initiator may transmit a poll message in the second slot of the first ranging round 1510 (for example, in the slot (for example, the second slot (slot index #1 (slot 1))) immediately next to the slot allocated for scheduling). The poll message may include the address of the initiator and/or the addresses of responders for multiple transmissions (for example, 2-byte address or 8-byte address). Responders having the address included in the poll message may initiate multiple transmission regarding fragments (MMS fragments) to the initiator having the address included in the poll message, by using information included in the NB control message.

In the multi-transmission step/operation 1513, the second UWB device (responder 1) and the third UWB device (responder 2) may transmit multiple fragments based on scheduling information included in the NB control message. In an embodiment, each MMS fragment/packet may be transmitted at the starting timepoint of the corresponding ranging slot. Each MMS fragment transmitted in the corresponding ranging round by one responder may include the same sequence data.

In an embodiment, the fragments may be RSFs.

In an embodiment, the responder may identify a scheduling list element for the responder in the scheduling IE, and may acquire sequence data to be included in the RSF (for example, MMRS sequence data) by using the sequence index field, the number-of-gaps field, and/or the repetition field included in the scheduling list element. The MMRS sequence data may be sequence data generated based on an MMRS sequence (for example, the MMRS sequence in Table 7).

In an embodiment, the responder may identify a scheduling list element for the responder in the scheduling IE, and may transmit multiple RSFs (or repeatedly transmit the RSF) by using the starting slot index field, the scheduling step field, and/or the scheduling repetition field included in the scheduling list element.

For example, as illustrated, responder 1 may acquire MMRS sequence data (first MMRS sequence data) included in the RSF thereof (first RSF) by using the sequence index field, the number-of-gaps field, and/or the repetition field included in the scheduling list element thereof (first scheduling list element). In addition, responder 1 may repeatedly transmit the first RSF three times during a period corresponding to three slots from the third slot of first ranging round 1410, by using the starting slot index field, the scheduling step field, and/or the scheduling repetition field included in the first scheduling list element.

For example, as illustrated, responder 2 may acquire MMRS sequence data (second MMRS sequence data) included in the RSF thereof (second RSF) by using the sequence index field, the number-of-gaps field, and/or the repetition field included in the scheduling list element thereof (second scheduling list element). In addition, responder 2 may repeatedly transmit the second RSF three times during a period corresponding to three slots from the third slot of first ranging round 1410, by using the starting slot index field, the scheduling step field, and/or the scheduling repetition field included in the second scheduling list element.

As illustrated, MMS fragments (for example, RSFs) of multiple devices (for example, responders) may be transmitted in the same slot (or at the same timepoint). For example, RSFs of multiple responders may be transmitted simultaneously in the same slot (for example, simultaneously at the starting timepoint of the slot). In this case, the first MMRS sequence data included in the first RSF transmitted by responder 1 may be different from the second MMRS sequence data included in the second RSF transmitted by responder 2. For example, the index of the MMRS sequence used to generate the first MMRS sequence data may be configured to have a different value from the index of the MMRS sequence used to generate the second MMRS sequence data. For example, the sequence index field in the scheduling list element for responder 1 in the scheduling IE may be configured to have a different value from the sequence index field in the scheduling list element for responder 2 in the scheduling IE. As a result, even if RSFs are transmitted together by multiple devices in the same slot, respective RSFs have different sequences (or codes), and the device that receives the same may thus accurately acquire the RSF of each device (code division scheme).

In the ranging report step/operation 1514, the initiator may transmit a ranging report to the responder(s) through the NB. For example, as illustrated, the initiator may transmit a ranging report regarding responder 1 (ranging report 1) to responder 1, and the initiator may transmit a ranging report regarding responder 2 (ranging report 2) to responder 2.

The scheduling step 1511, the trigger step 1512, the multi-transmission step 1513, and the ranging report step 1514 described above may be performed within one ranging round 1510.

Meanwhile, scheduling information (for example, a scheduling IE) may be transmitted only in case that scheduling regarding a device (for example, a responder) is necessary. For example, in case that there is no need to update scheduling information, it may be unnecessary to transmit scheduling information (or an NB control packet including scheduling information) in the corresponding ranging round. In this case, transmission of the corresponding control packet (or the scheduling step for transmission of the corresponding control packet) may be omitted. For example, as illustrated, in case that it is unnecessary to update the scheduling information transmitted in the first ranging round 1510, transmission of the scheduling information (or the scheduling step) in the second ranging round (round 1) 1520 may be omitted. In this case, the initiator may not perform the scheduling step, and may immediately perform the trigger step 1522 for triggering multiple transmissions in the first slot (for example, slot index #0) of the second ranging round 1520. Thereafter, each responder may perform the multi-transmission step 1523, and the initiator may perform the ranging report step 1524. The operations in the trigger step 1522, the multi-transmission step 1523, and the ranging report step 1524 of the second ranging round 1520 may be identical to the operations in the trigger step 1512, the multi-transmission step 1513, and the ranging report step 1514 of the first ranging round 1510.

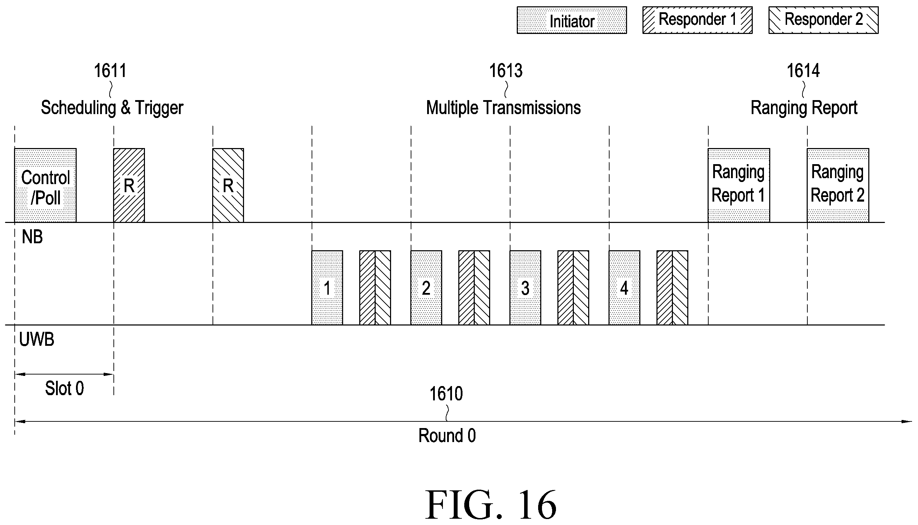

FIG. 16 illustrates an example of a method for performing ranging through multiple transmissions by using an NB assist according to an embodiment of the disclosure.

Although the first UWB device is illustrated in FIG. 16 as playing the role of an initiator that transmits control information (that is, the first UWB device plays the role of a controller and that of an initiator), the first UWB device may play the role of a controller that transmits control information, and another UWB device may play the role of an initiator.

Although three UWB devices are illustrated in FIG. 16 as playing the role of initiators or responders for convenience of explanation, the technical idea of the disclosure is not limited thereto, and the number of UWB devices that play the role of initiators or responders may be variously implemented.

UWB ranging may be performed by using the above-described multi-transmission method (NBA-MMS UWB mode). For example, as illustrated in FIG. 16, one-to-many ranging may be performed by using the multi-transmission method. Such UWB ranging may be optimized by using the multi-transmission method.

In the embodiment in FIG. 16, unlike the embodiment in FIG. 15, one NB message that performs both the function of an NB control message for multiple transmissions (for example, the NB control message in FIG. 14) and the function of a poll message (for example, the poll message in FIG. 14) may be transmitted through the NB. That is, in the embodiment in FIG. 16, the message for scheduling and the message for triggering may be integrated into one message and then transmitted. Therefore, in FIG. 16, the scheduling step and the triggering step may be combined into one step.

Referring to FIG. 16, in the scheduling and triggering step/operation 1611, the first UWB device (initiator) may transmit an NB message including scheduling information (for example, the scheduling IE in FIG. 13) through the NB. In addition, the NB message may also perform the function of a poll message for triggering UWB multiple transmissions. In an embodiment, the initiator may transmit an NB message including a scheduling IE in the first slot (for example, slot index #0 (slot 0)) of the first ranging round (round 0) 1610. In an embodiment, the NB message may be transmitted at the starting timepoint of slot 0.

The second UWB device (responder 1) and the third UWB device (responder 2) may respond to the NB message and then transmit a response message to the initiator through the NB. For example, each responder may transmit a response message thereof in a slot that follows the slot (the first slot (slot 0)) allocated for scheduling of the first ranging round 1610. For example, responder 1 may transmit a response message thereof in the second slot (for example, in the slot (slot 1) immediately next to the slot allocated for scheduling of the first ranging round 1610), and responder 2 may transmit a response message thereof in the third slot (for example, in the slot (slot 2) immediately next to the second slot). In an embodiment, each responder may identify a slot for transmitting a response message thereof, based on information included in the scheduling IE. In an embodiment, each response message may be transmitted at the starting timepoint of the corresponding slot. Upon receiving response messages from responder 1 and responder 2, the initiator may confirm that responder 1 and responder 2 have successfully received the NB message, and may perform subsequent steps.

In the multi-transmission step/operation 1613, the initiator and each responder may transmit multiple packets based on scheduling information.

In an embodiment, the initiator may transmit an MMS packet thereof (initiation MMS packet) at the starting timepoint of each slot allocated for multiple transmissions. In the disclosure, MMS packets may also be referred to as multiple transmission (MT) packets.

In an embodiment, each responder may receive an initiation MMS packet in each slot allocated for multiple transmissions, and may transmit an MMS packet thereof (response MMS packet) as a response to the initiation MMS packet. In an embodiment, each responder may transmit a response MMS packet at a timepoint spaced apart from the starting timepoint of each slot allocated for multiple transmissions by a preconfigured offset. Each MMS packet/fragment transmitted in the corresponding ranging round by one UWB device (initiator or responder) may include the same sequence data.

In an embodiment, the initiator's initiation MMS packet and/or each responder's response MMS packet may include an RSF. In this case, the responder may identify a scheduling list element for the responder in the scheduling IE, and may acquire the sequence data to be included in the RSF (for example, MMRS sequence), by using the sequence index field, the number-of-gaps field, and/or the repetition field contained in the scheduling list element. The MMRS sequence data may be sequence data generated based on an MMRS sequence (for example, the MMRS sequence in Table 7).

In an embodiment, the responder may identify a scheduling list element for the responder in the scheduling IE, and may identify slot(s) in which multiple packets are transmitted (or repeatedly transmitted), by using the starting slot index field, the scheduling step field, and/or the scheduling repetition field included in the scheduling list element. For example, as illustrated, the responder may identify that the fourth slot of the ranging round 1510 is the starting slot for multiple transmissions, and that packets are transmitted four times during the period of four slots.

As illustrated, MMS packets (for example, MMS packets including RSFs) of multiple devices (for example, responders) may be transmitted in the same slot. For example, MMS packets of multiple responders may be transmitted simultaneously in the same slot (for example, simultaneously at a timepoint spaced apart from the starting timepoint of the corresponding slot by an offset). In this case, a scheme for avoiding collision between respective packets needs to be considered.

For example, in case that packets include RSFs, the first MMRS sequence data included in the first RSF of the first packet transmitted by responder 1 may be configured differently from the second MMRS sequence data included in the second RSF of the second packet transmitted by the second device (for example, responder 2), in order to avoid collisions between packets. For example, the index of the MMRS sequence used to generate the first MMRS sequence data may be configured to have a different value from the index value of the MMRS sequence used to generate the second MMRS sequence data. In this case, the sequence index field in the scheduling list element for responder 1 in the scheduling IE may be configured to have a different value from the sequence index field in the scheduling list element for responder 2 in the scheduling IE. As a result, even if RSFs are transmitted simultaneously by multiple responders in the same slot, respective RSFs have different sequences (or codes), and the initiator that receives the same may thus accurately acquire the RSF of each responder.

The transmission sequence in each slot in the multi-transmission step 1613 will now be described, as an example, with reference to FIG. 16.

The initiator may transmit an initiation MMS packet through the UWB at the starting timepoint of the corresponding slot in the multi-transmission step/operation 1613, and each of responder 1 and responder 2 may receive the initiation MMS packet through the UWB.

Responder 1 may transmit a first response MMS packet (first packet) in the corresponding slot through the UWB as a response to the initiation MMS packet, responder 2 may transmit a second response MMS packet (second packet) in the corresponding slot through the UWB as a response to the initiation MMS packet, and the initiator may receive the first response MMS packet and the second response MMS packet through the UWB. The first response MMS packet and the second response MMS packet may be transmitted simultaneously at a timepoint spaced apart from the starting timepoint of the corresponding slot by a preconfigured offset. However, as described above, the first RSF included in the first response MMS packet and the second RSF included in the second response MMS packet are configured by MMRS sequences (for example, the MMRS sequences in Table 7) (codes) having different indexes, and the initiator may thus accurately receive the first and second packets without collision.

The initiator may perform ranging measurement based on pairs of initiation MMS packet and response MMS packets. For example, the initiator may calculate the first ToF based on SS-TWR by using pairs of the initiation MMS packets and first response MMS packets, and may acquire distance information between the initiator and responder 1, based on the ToF. For example, the initiator may calculate the second ToF based on SS-TWR by using pairs of initiation MMS packets and second response MMS packets, and may acquire distance information between the initiator and responder 2, based on the second ToF.

In the ranging report step/operation 1614, the initiator may transmit a ranging report to the responder(s) through the NB. For example, as illustrated, the initiator may transmit a ranging report regarding responder 1 (ranging report 1) to responder 1, and the initiator may transmit a ranging report regarding responder 2 (ranging report 2) to responder 2. Ranging report 1 may include the first ToF and/or the distance information between the initiator and responder 1 acquired by using the first ToF, and ranging report 2 may include the second ToF and/or the distance information between the initiator and responder 2 acquired by using the second ToF.

The scheduling step 1611, the trigger step 1612, the multi-transmission step 1613, and the ranging report step 1614 described above may be performed within one ranging round 1610.

Although the embodiment in FIG. 16 has been described with reference to an example in which the MMS packet (MT packet) used in the multi-transmission step 1613 includes an RSF, the embodiment is not limited thereto. For example, the MMS packet may include an SHR, a preamble, an STS, or a RIF. In this case, scheduling information included in the NB control message may include information for generating sequence data included in the corresponding packet. For example, the scheduling information may include code index information of the length 31 ternary code in Table 4. In an embodiment, the scheduling information may be transmitted through the scheduling IE in FIG. 13 or the RDM IE in FIG. 11B.

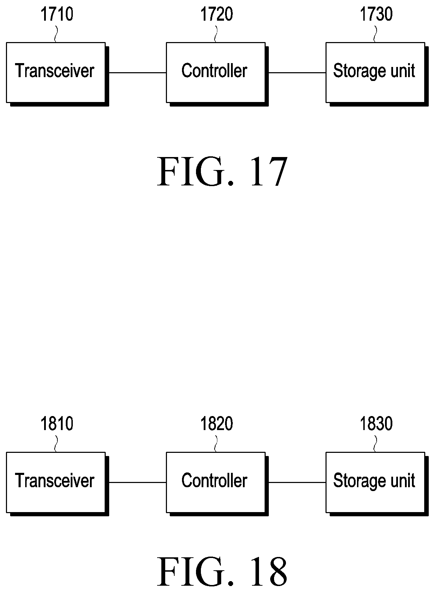

FIG. 17 illustrates the structure of a first UWB device according to an embodiment of the disclosure.

In the embodiment in FIG. 17, the first UWB device may be an electronic device corresponding to the UWB device in FIG. 1, including the UWB device, or including a part of the UWB device.

In the embodiment in FIG. 17, the first UWB device may be a UWB device operating as a controller and/or an initiator.

Referring to FIG. 17, the first UWB device may include a transceiver 1710, a controller 1720, and a storage unit 1730. In the disclosure, the controller may be defined as a circuit or an application-specific integrated circuit or at least one processor.

The transceiver 1710 may transmit/receive signals with other entities.

The controller 1720 may control overall operations of the electronic device according to an embodiment proposed in the disclosure. For example, the controller 1720 may control signal flows between respective blocks so as to perform operations according to the flowchart described above. Specifically, the controller 1720 may control operations of the first UWB device described with reference to FIG. 1 to FIG. 16 and FIG. 19 to FIG. 21, for example.

The storage unit 1730 may store at least one of information transmitted/received through the transceiver 1710 and information generated through the controller 1720. For example, the storage unit 1730 may store information and data necessary for the method described with reference to FIG. 1 to FIG. 16 and FIG. 19 to FIG. 21, for example.

The first UWB device or the controller 1720 may transmit a ranging control message for UWB multiple transmissions through the UWB or NB in the first slot within the ranging round.

The first UWB device or the controller 1720 may transmit a triggering packet for triggering the UWB multiple transmissions through the UWB or the NB in the second slot within the ranging round.

The first UWB device or the controller 1720 may receive a first packet transmitted by the second UWB device in the third slot within the ranging round, based on the ranging control message, through the UWB.

The first UWB device or the controller 1720 may receive a second packet transmitted by the third UWB device in the third slot within the ranging round, based on the ranging control message, through the UWB.

According to an embodiment, in case that the triggering packet is transmitted through the UWB channel, the triggering packet may include a synchronization header, and the synchronization header may include a SYNC field and an SFD field.

According to an embodiment, in case that the triggering packet is transmitted through the NB channel, the triggering packet may include a poll message, and the poll message may include address information of the second UWB device and the third UWB device.

According to an embodiment, the first packet may include a first ranging sequence fragment (first RSF), the second packet may include a second ranging sequence fragment (second RSF), and the first RSF may be generated based on an MMRS sequence different from the second RSF.

According to an embodiment, the ranging control message may include a first scheduling list element regarding the second UWB device, and a second scheduling list element regarding the third UWB device. The first scheduling list element may include a first sequence index field indicating the index of the first MMRS sequence used for the first RSF. The second scheduling list element may include a second sequence index field indicating the index of the second MMRS sequence used for the second RSF. The first sequence index field may be configured to have a value different from the value of the second sequence index field.

According to an embodiment, the first scheduling list element may further include a first number-of-gaps field indicating the size of zero gaps regarding the first RSF, and a first repetition field indicating the number of repetitions of the first MMRS. The second scheduling list element may further include a second number-of-gaps field indicating the size of zero gaps regarding the second RSF and a second repetition field indicating the number of repetitions of the second MMRS.

According to an embodiment, the first packet and the second packet may be transmitted at the same timepoint in the third slot.

According to an embodiment, the method may further include a step of transmitting a third packet in a third slot within the ranging round. The third packet may be transmitted before the first packet and the second packet. The third packet, the first packet, and the second packet may be used for ranging measurement.

FIG. 18 illustrates the structure of a second UWB device according to an embodiment of the disclosure.

In the embodiment in FIG. 18, the second UWB device may be an electronic device corresponding to the UWB device in FIG. 1, including the UWB device, or including a part of the UWB device.

In the embodiment in FIG. 18, the second UWB device may be a UWB device operating as a controllee and/or a responder.

Referring to FIG. 18, the second UWB device may include a transceiver 1810, a controller 1820, and a storage unit 1830. In the disclosure, the controller may be defined as a circuit or an application-specific integrated circuit or at least one processor.

The transceiver 1810 may transmit/receive signals with other entities.

The controller 1820 may control overall operations of the electronic device according to an embodiment proposed in the disclosure. For example, the controller 1820 may control signal flows between respective blocks so as to perform operations according to the flowchart described above. Specifically, the controller 1820 may control operations of the second UWB device described with reference to FIG. 1 to FIG. 16 and FIG. 19 to FIG. 21, for example.

The storage unit 1830 may store at least one of information transmitted/received through the transceiver 1810 and information generated through the controller 1820. For example, the storage unit 1830 may store information and data necessary for the method described with reference to FIG. 1 to FIG. 16 and FIG. 19 to FIG. 21, for example.

The second UWB device or the controller 1820 may receive a ranging control message for UWB multiple transmissions from the first UWB device through the UWB or NB in the first slot within the ranging round.

The second UWB device or the controller 1820 may receive a triggering packet for triggering the UWB multiple transmissions from the first UWB device through the UWB or the NB in the second slot within the ranging round.

The second UWB device or the controller 1820 may transmit a first packet in the third slot within the ranging round, based on the ranging control message, through the UWB.

According to an embodiment, the third slot within the ranging round may be used by the third UWB device to transmit a second packet, based on the ranging control message.

According to an embodiment, in case that the triggering packet is received through the UWB channel, the triggering packet may include a synchronization header, and the synchronization header may include a SYNC field and an SFD field.

According to an embodiment, in case that the triggering packet is received through the NB channel, the triggering packet may include a poll message, and the poll message may include address information of the second UWB device and the third UWB device.

According to an embodiment, the first packet may include a first ranging sequence fragment (first RSF), the second packet may include a second ranging sequence fragment (second RSF), and the first RSF may be generated based on an MMRS sequence different from the second RSF.

According to an embodiment, the ranging control message may include a first scheduling list element regarding the second UWB device, and a second scheduling list element regarding the third UWB device. The first scheduling list element may include a first sequence index field indicating the index of the first MMRS sequence used for the first RSF. The second scheduling list element may include a second sequence index field indicating the index of the second MMRS sequence used for the second RSF. The first sequence index field may be configured to have a value different from the value of the second sequence index field.

According to an embodiment, the first scheduling list element may further include a first number-of-gaps field indicating the size of zero gaps regarding the first RSF, and a first repetition field indicating the number of repetitions of the first MMRS. The second scheduling list element may further include a second number-of-gaps field indicating the size of zero gaps regarding the second RSF and a second repetition field indicating the number of repetitions of the second MMRS.

According to an embodiment, the first packet and the second packet may be transmitted at the same timepoint in the third slot. According to an embodiment, the method may further include a step of transmitting a third packet in a third slot within the ranging round. The third packet may be transmitted before the first packet and the second packet. The third packet, the first packet, and the second packet may be used for ranging measurement.

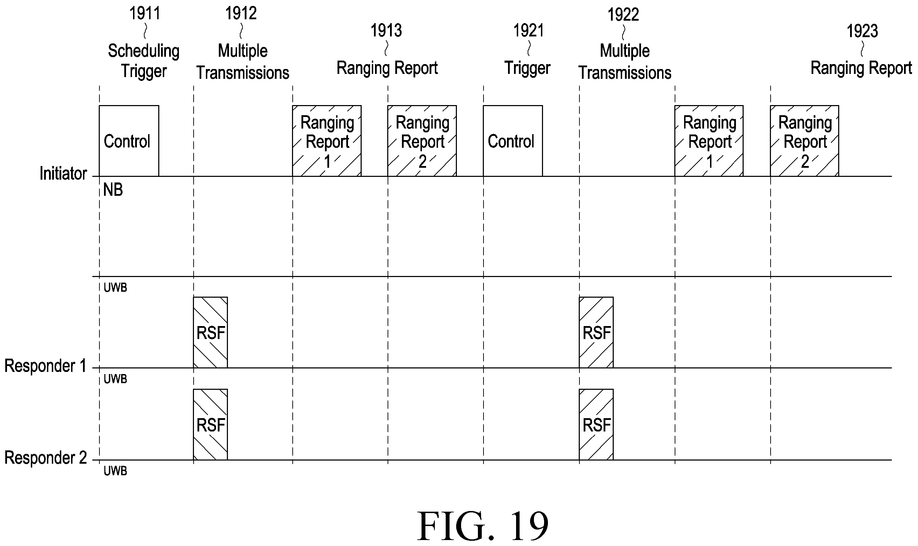

FIG. 19 illustrates another example of a multi-transmission method using an NB assist according to an embodiment of the disclosure.

Although the first UWB device is illustrated in FIG. 19 as playing the role of an initiator that transmits control information (that is, the first UWB device plays the role of a controller and that of an initiator), the first UWB device may play the role of a controller that transmits control information, and another UWB device may play the role of an initiator.

Although three UWB devices are illustrated in FIG. 19 as playing the role of initiators or responders for convenience of explanation, the technical idea of the disclosure is not limited thereto, and the number of UWB devices that play the role of initiators or responders may variously implemented.

Unlike the multi-transmission method in FIG. 15 in which the scheduling step/operation 1511 and the trigger step/operation 1512 are separately performed, scheduling and/or triggering may be performed through one scheduling/trigger step/operation 1911 in the multi-transmission method in FIG. 19.

According to an embodiment, in the multi-transmission method in FIG. 15, the first UWB device may transmit a control message for scheduling and a poll message for triggering in different time intervals (for example, different slot indexes), respectively. According to an embodiment, in the multi-transmission method in FIG. 19, the first UWB device may transmit a control message for scheduling and/or triggering in a configured time interval (for example, a configured slot index).

Referring to FIG. 19, in the scheduling/trigger step/operation 1911, the first UWB device (initiator) may transmit an NB control message (or NB control packet) containing at least one of scheduling information and information for multi-transmission triggering through the NB. For example, the initiator may transmit an NB control message (or NB control packet) in the first slot (for example, slot index #0) of the first ranging round (round 0). In an embodiment, the NB control message may be transmitted at the starting timepoint of slot 0.

According to an embodiment, the information for multi-transmission triggering may include the address of the initiator and/or the addresses of responders for multiple transmissions (for example, 2-byte address or 8-byte address). Responders that have the address included in the information for multi-transmission triggering may initiate and/or perform multiple transmissions regarding a fragment (MMS fragment) to the corresponding initiator by using the information included in the NB control message.

In the multi-transmission step/operation 1912, the second UWB device (responder 1) and the third UWB device (responder 2) may transmit multiple fragments based on scheduling information included in the NB control message. In an embodiment, each MMS fragment/packet may be transmitted at the starting timepoint of the corresponding ranging slot. Each MMS fragment transmitted in the corresponding ranging round by one responder may include the same sequence data.

According to an embodiment, the fragments may be RSFs. According to an embodiment, the second UWB device (responder 1) and/or the third UWB device (responder 2) may transmit multiple RSFs (or repeatedly transmit the same) by using the slot index included in the NB control message (or NB control packet) transmitted in scheduling/trigger step/operation 1911.

According to an embodiment, the second UWB device (responder 1) and/or the third UWB device (responder 2) may acquire sequence data (for example, MMRS sequence data) to be included in RSFs, by using the UWB PHY CONFIG field included in the NB control message (or NB control packet) transmitted in the scheduling/trigger step/operation 1911. The MMRS sequence data may be sequence data generated based on an MMRS sequence (for example, the MMRS sequence in Table 7).

In the ranging report step/operation 1913, the first UWB device (initiator) may transmit a ranging report to the second UWB device (responder 1) and/or the third UWB device (responder 2) through the NB. According to an embodiment, the first UWB device (initiator) may transmit a ranging report (ranging report 1) regarding the second UWB device (responder 1) to the second UWB device (responder 1). According to an embodiment, the first UWB device (initiator) may transmit a ranging report (ranging report 2) regarding the third UWB device (responder 2) to the third UWB device (responder 2).

The scheduling/trigger step 1911, the multi-transmission step 1912, and the ranging report step 1913 described above may be performed within one ranging round (for example, first ranging round).

Meanwhile, scheduling information (for example, scheduling information included in the NB control message (or NB control packet) transmitted in the scheduling/trigger step/operation 1911) may be transmitted only in case that scheduling regarding a device (for example, a responder) is necessary. For example, in case that there is no need to update scheduling information, transmission of scheduling information may be unnecessary in the corresponding ranging round. In this case, the first UWB device (initiator) may transmit an NB control message including information for multi-transmission triggering, excluding the scheduling information, through the NB in the trigger step 1921. Thereafter, the second UWB device (responder 1) and/or the third UWB device (responder 2) may perform the multi-transmission step 1922, and the first UWB device (initiator) may perform the ranging report step 1524.

The trigger step 1921, the multi-transmission step 1922, and the ranging report step 1923 described above may be performed within one ranging round (for example, second ranging round).

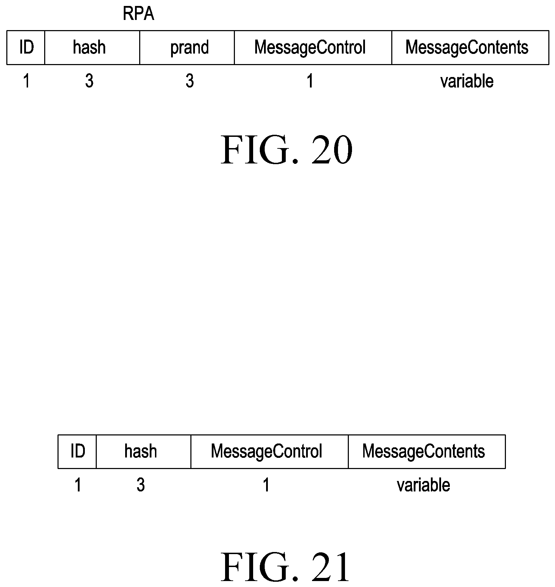

FIG. 20 illustrates the packet format of an NB control packet according to an embodiment of the disclosure.

According to an embodiment, the NB control packet may include an NB control message transmitted in the scheduling/trigger step 1911 in FIG. 19. According to an embodiment, the NB control packet may include an NB control message transmitted in the trigger step 1921 in FIG. 19. According to an embodiment, the NB control packet may include an NB control message transmitted in scheduling step 1511 in FIG. 15.

Referring to FIG. 20, the NB control packet may include at least one of an ID field, a hash field, a prand field, a MessageControl field, and a MessageContents field. The hash field and the prand field may constitute a resolvable private address (RPA).

The ID field may be configured by a configured octet (for example, 1 octet) and may indicate an ID for distinguishing the NB control message from other messages. According to an embodiment, the UWB device may distinguish the NB control message from other messages, based on the ID field.

Each of the hash field and the prand field which constitute a resolvable private address (RPA) may be configured by a configured octet (for example, 3 octets).

The hash field may include RPA_hash configured by the result value of advanced encryption standard (AES)-128-electronic code block(ECB) ([key=IdentityResolvingKey, data=RPA_prand]). As the key value, IdentityResolvingKey which is known only to two devices (for example, the first UWB device and the second UWB device) may be used, and RPA_prand (a prand field value) may be used as the data value.

The prand field may be configured to have a static value for at least one ranging block. The prand field may include RPA_prand.

According to an embodiment, the UWB device may identify the RPA by using a key (=IdentityResolvingKey) and data (=RPA_prand). According to an embodiment, the UWB device may identify the RPA by using data (=RPA_prand) included in the NB control packet (or NB control message), and a key (=IdentityResolvingKey) held thereby.

The MessageControl field may be configured by a configured octet (for example, 1 octet).

The size of the MessageContents field may be variably configured according to the MessageControl field. Information included in the MessageContents field may change depending on the MessageControl field.

In the disclosure, the NB control packet may be variously implemented according to the configuration of the MessageControl field and the MessageContents field.

According to an embodiment, the MessageControl field and MessageContents field included in the NB control packet may be configured as in Table 8:

**[Table 8]**

| MessageControl | MessageContents [Length] |
|---|---|
| 0x00 | {Number of Responder [1], List of {Responder Address [3], Slot index [1], UWB PHY CONFIG[3]} |
| 0x01 | {Number of Responder [1], List of {Responder Address [3], Slot index [1]} |
| 0x02 | {Number of Responder [1], List of {Responder Address [3], UWB PHY CONFIG[3]} |

For example, if the MessageControl field is 0x00, the MessageContents field may be configured by a list of 1 octet of Number of Responder, 3 octets of Responder Address, 1 octet of Slot index, and 3 octets of UWB PHY CONFIG. The Number of Responder may indicate the number of list elements configured by following {Responder Address, Slot index, UWB PHY CONFIG}. For example, in case that the Number of Responder field value is 2, the following list element {Responder Address, Slot index, UWB PHY CONFIG} may be repeated twice.

For example, if the MessageControl field is Ox01, the MessageContents field may be configured by a list of 1 octet of Number of Responder, 3 octets of Responder Address, and 1 octet of Slot index. For example, if the MessageControl field is 0x02, the MessageContents field may be configured by a list of 1 octet of Number of Responder, 3 octets of Responder Address, and 3 octets of UWB PHY CONFIG.

According to one embodiment, the description of the MessageContents field listed in Table 8 may be configured as in Table 9:

**[Table 9]**

| MessageContents | Description |
|---|---|
| [Length in octets] | |
| Number of Responder [1] | Number of responders participating in corresponding ranging (that is, identical to length of following list) |
| Responder Address [3] | Address of responder. May be RPA_Hash value or public/private address |
| Slot index [1] | Slot index allocated to corresponding responder (in case that poll packet is transmitted, slot in which poll packet is transmitted is no. 0; in case that only control packet is transmitted, slot in which control packet is transmitted is no. 0) |
| UWB PHY CONFIG [3] | PHY Configuration of RSF |
| | Bits 0-5: Preamble Code Indexes {9, ..., 48} |
| | if (9 <= Preamble Code Index <= 32) { |
| | Bits 6-12: Reserved |
| | } elseif (33 <= Preamble Code Index <= 48) { |
| | Bits 6-12: MMRS complementary set zeros {0, ..., 64} |
| | } |
| | Bits 13-15: Number of MSR {32, 40, 48, 64, 128, 256} |
| | Bits 16-19: UWB channel 1-16 |
| | Bits 20-23: Reserved |

For example, Bits 0-5 of UWB PHY CONFIG indicate the Preamble Code Index. For example, in case that 9 ≤ Preamble Code Index ≤ 32, Bits 6-12 may be configured as Reserved. For example, in case that 33 ≤ Preamble Code Index ≤ 48, Bits 6-12 may indicate MMRS complementary set zeros, Bits 13-15 may indicate the number of MSRs, Bits 16-19 may indicate the UWB channel, and Bits 20- 23 may be configured as Reserved.

Each MMRS may be divided into part A (left part) and part B (right part) ([A, B]), one MMRS symbol may be configured by [A, Z, B, Z], and the one RSF may be configured by repetition of the MMRS symbol. Z may indicate 0s padded between A and B, and the number of 0s may be the value of the MMRS complementary set zeros field. The Number of MSR (MMRS symbol repetition) field, may indicate the MMRS symbol value that is repeated to configure one RSF, and the Number of MSR may be configured to be one of {32, 40, 48, 64, 128, 256}.

According to an embodiment, the MessageControl field and MessageContents field included in the NB control packet may be configured as in Table 10:

**[Table 10]**

| MessageControl | MessageContents [Length] |
|---|---|
| 0x03 | {same as MessageControl = 0x00}, but Poll Message will not be transmitted |
| 0x04 | {same as MessageControl = 0x01}, but Poll Message will not be transmitted |
| 0x05 | {same as MessageControl = 0x02}, but Poll Message will not be transmitted |
| 0x06 | {0x00}, but Poll Message will not be transmitted |

For example, if the MessageControl field is 0x03, the MessageContents field may be configured the same as the MessageContents field in case that the MessageControl field in Table 8 and Table 9 is 0x00, but no poll message may be transmitted. For example, if the MessageControl field is 0x04, the MessageContents field may be configured the same as the MessageContents field in case that the MessageControl field in Table 8 and Table 9 is Ox01, but no poll message may be transmitted. For example, if the MessageControl field is 0x05, the MessageContents field may be configured the same as the MessageContents field in case that the MessageControl field in Table 8 and Table 9 is 0x02, but no poll message may be transmitted. For example, if the MessageControl field is set to 0x06, the MessageContents field may be configured to be 0x00, but no poll message may be transmitted.

According to one embodiment, if the MessageContents field of the NB control packet is configured to be 0x00, the corresponding part may be filled with 0x00 and then transmitted, or the same may be transmitted in an empty state.

According to one embodiment, the MessageControl field and MessageContents field included in the NB control packet may be configured as in Table 11:

**[Table 11]**

| MessageControl | MessageContents [Length] |
|---|---|
| 0x10 | {same as MessageControl = 0x00}, but only Initiator send the measurement report |
| 0x11 | {same as MessageControl = 0x01}, but only Initiator send the measurement report |
| 0x12 | {same as MessageControl = 0x02}, but only Initiator send the measurement report |
| 0x13 | {same as MessageControl = 0x00}, but Poll Message will not be transmitted, and only Initiator send the measurement report |
| 0x14 | {same as MessageControl = 0x01}, but Poll Message will not be transmitted, and only Initiator send the measurement report |
| 0x15 | {same as MessageControl = 0x02}, but Poll Message will not be transmitted, and only Initiator send the measurement report |
| 0x16 | {0x00}, but Poll Message will not be transmitted, and only Initiator send the measurement report |

For example, if the MessageControl field is 0x10, the MessageContents field may be configured the same as the MessageContents field in case that the MessageControl field in Table 8 and Table 9 is 0x00, but only the initiator may transmit a measurement report.

For example, if the MessageControl field is Ox13, the MessageContents field may be configured the same as the MessageContents field in case that the MessageControl field in Table 8 and Table 9 is 0x00, but no poll message may be transmitted, and only the initiator may transmit a measurement report.

For example, if the MessageControl field is 0x06, the MessageContents field may be configured to be 0x00, but no poll message may be transmitted, and only the initiator may transmit a measurement report. According to one embodiment, if the MessageContents field of the NB control packet is configured to be 0x00, the corresponding part may be filled with 0x00 and then transmitted, or the same may be transmitted in an empty state.

According to an embodiment, the MessageControl field and MessageContents field included in the NB control packet may be configured as in Table 12:

**[Table 12]**

| MessageControl | MessageContents [Length] |
|---|---|
| 0x20 | {same as MessageControl = 0x00}, but only Responder send the measurement report |
| 0x21 | {same as MessageControl = 0x01}, but only Responder send the measurement report |
| 0x22 | {same as MessageControl = 0x02}, but only Responder send the measurement report |
| 0x23 | {same as MessageControl = 0x00}, but Poll Message will not be transmitted, and only Responder send the measurement report |
| 0x24 | {same as MessageControl = 0x01}, but Poll Message will not be transmitted, and only Responder send the measurement report |
| 0x25 | {same as MessageControl = 0x02}, but Poll Message will not be transmitted, and only Responder send the measurement report |
| 0x26 | {0x00}, but Poll Message will not be transmitted, and only Responder send the measurement report |

For example, when the MessageControl field is 0x20, the MessageContents field may be configured the same as the MessageContents field in case that the MessageControl field in Table 8 and Table 9 is 0x00, but only the responder may transmit a measurement report.

For example, if the MessageControl field is 0x23, the MessageContents field may be configured the same as the MessageContents field in case that the MessageControl field in Table 8 and Table 9 is 0x00, but no poll message may be transmitted, and only the responder may transmit a measurement report.

For example, if the MessageControl field is 0x26, the MessageContents field may be configured to be 0x00, but no poll message may be transmitted, and only the responder may transmit a measurement report. According to one embodiment, if the MessageContents field of the NB control packet is configured to be 0x00, the corresponding part may be filled with 0x00 and then transmitted, or the same may be transmitted in an empty state.

According to one embodiment, the MessageControl field and MessageContents field included in the NB control packet may be configured as Table 13:

**[Table 13]**

| MessageControl | MessageContents [Length] |
|---|---|
| 0x30 | {same as MessageControl = 0x00}, but Initiator and Responder send the measurement report |
| 0x31 | {same as MessageControl = 0x01}, but Initiator and Responder send the measurement report |
| 0x32 | {same as MessageControl = 0x02}, but Initiator and Responder send the measurement report |
| 0x33 | {same as MessageControl = 0x00}, but Poll Message will not be transmitted, and Initiator and Responder send the measurement report |
| 0x34 | {same as MessageControl = 0x01}, but Poll Message will not be transmitted, and Initiator and Responder send the measurement report |
| 0x35 | {same as MessageControl = 0x02}, but Poll Message will not be transmitted, and Initiator and Responder send the measurement report |
| 0x36 | {0x00}, but Poll Message will not be transmitted, and Initiator and Responder send the measurement report |

For example, when the MessageControl field is 0x30, the MessageContents field may be configured the same as the MessageContents field in case that the MessageControl field in Table 8 and Table 9 is 0x00, but the initiator and the responder may transmit a measurement report.

For example, if the MessageControl field is 0x33, the MessageContents field may be configured the same as the MessageContents field in case that the MessageControl field in Table 8 and Table 9 is 0x00, but no poll message may be transmitted, and the initiator and the responder may transmit a measurement report.

For example, if the MessageControl field is 0x36, the MessageContents field may be configured to be 0x00, but no poll message may be transmitted, and the initiator and the responder may transmit a measurement report. According to one embodiment, if the MessageContents field of the NB control packet is configured to be 0x00, the corresponding part may be filled with 0x00 and then transmitted, or the same may be transmitted in an empty state.

According to one embodiment, the MessageControl field and the MessageContents field included in the NB control packet may be configured based on a combination of at least one of Table 8 to Table 13.

FIG. 21 illustrates the packet format of an NB poll packet according to an embodiment of the present disclosure.

According to one embodiment, the NB poll packet may include an NB control message transmitted in the scheduling/trigger step 1911 in FIG. 19. According to an embodiment, the NB poll packet may include an NB control message transmitted in the trigger step 1921 in FIG. 19. According to one embodiment, the NB poll packet may include an NB message transmitted in trigger step 1512 in FIG. 15.

Referring to FIG. 21, the NB poll packet may include at least one of an ID field, a hash field, a MessageControl field, and a MessageContents field.

The ID field may be configured by a configured octet (for example, 1 octet) and may indicate an ID for distinguishing the NB control message regarding the NB poll packet from other messages. According to an embodiment, the UWB device may distinguish the NB control message regarding the NB poll packet from other messages, based on the ID field.

The hash field may include RPA_hash configured by advanced encryption standard (AES)-128-electronic code block (ECB) ([key=IdentityResolvingKey, data=RPA_prand]).

The MessageControl field may be configured by a configured octet (for example, 1 octet).

The size of the MessageContents field may be variably configured according to the MessageControl field. Information included in the MessageContents field may change depending on the MessageControl field

According to one embodiment, if the MessageContents field of the NB poll packet is configured to be 0x00, the corresponding part may be filled with 0x00 and then transmitted, or the same may be transmitted in an empty state.

In the disclosure, the NB poll packet may be variously implemented according to the configuration of the MessageControl field and the MessageContents field.

According to an embodiment, the MessageControl field and MessageContents field included in the NB poll packet may be configured as in Table 14.

**[Table 14]**

| MessageControl | MessageContents [Length] |
|---|---|
| 0x00 | {0x00} |
| 0x01 | {Number of Responder [1], List of {Responder Address [3], UWB PHY CONFIG[3]} |

For example, if the MessageControl field is 0x00, the MessageContents field may be configured to be 0x00. According to an embodiment, if the MessageContents field of the NB poll packet is configured to be 0x00, the corresponding part may be filled with 0x00 and then transmitted, or the same may be transmitted in an empty state.

For example, if the MessageControl field is Ox01, the MessageContents field may be configured by a list of 1 octet of Number of Responder, 3 octets of Responder Address, and 3 octets of UWB PHY CONFIG. According to an embodiment, the description of the MessageContents field listed in Table 14 may be configured as in Table 9.

The Number of Responder can indicate the number of list elements configured by following {Responder Address, UWB PHY CONFIG}. For example, in case that the Number of Responder field value is 2, the following list element {Responder Address, UWB PHY CONFIG} may be repeated twice.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method for operating a first ultra-wideband (UWB) device, the method comprising:
transmitting, through a UWB or a narrow band (NB), a ranging control message for UWB multiple transmissions in a first slot within a ranging round;
transmitting, through the UWB or the NB, a triggering packet for triggering the UWB multiple transmissions in a second slot within the ranging round;
receiving, through the UWB, a first packet transmitted by a second UWB device in a third slot within the ranging round, based on the ranging control message; and
receiving, through the UWB, a second packet transmitted by a third UWB device in the third slot within the ranging round, based on the ranging control message.

2. The method of claim 1, wherein, based on the triggering packet being transmitted through the UWB channel, the triggering packet comprises a synchronization header, and the synchronization header comprises a SYNC field and an SFD field.

3. The method of claim 1, wherein, based on the triggering packet being transmitted through the NB channel, the triggering packet comprises a poll message, and the poll message comprises at least one of address information of the first UWB device, and address information of the second UWB device and the third UWB device.

4. The method of claim 1, wherein the first packet comprises a first ranging sequence fragment (first RSF),
wherein the second packet comprises a second ranging sequence fragment (second RSF), and
wherein the first RSF is generated based on an MMRS sequence different from the second RSF.

5. The method of claim 4, wherein the ranging control message comprises a first scheduling list element regarding the second UWB device, and a second scheduling list element regarding the third UWB device,
wherein the first scheduling list element comprises a first sequence index field indicating the index of a first MMRS sequence used for the first RSF,
wherein the second scheduling list element comprises a second sequence index field indicating the index of a second MMRS sequence used for the second RSF, and
wherein the value of the first sequence index field is configured to be different from the value of the second sequence index field.

6. The method of claim 5, wherein the first scheduling list element further comprises a first number-of-gaps field indicating the size of zero gaps regarding the first RSF and a first repetition field indicating the number of repetitions of the first MMRS, and
wherein the second scheduling list element further comprises a second number-of-gaps field indicating the size of zero gaps regarding the second RSF and a second repetition field indicating the number of repetitions of the second MMRS.

7. The method of claim 4, wherein the first packet and the second packet are transmitted at an identical timepoint in the third slot.

8. The method of claim 1, further comprising transmitting a third packet in a third slot within the ranging round,
wherein the third packet is transmitted before the first packet and the second packet, and the third packet and the first and second packets are used for ranging measurement.

9. A method for operating a second ultra-wideband (UWB) device, the method comprising:
receiving, from a first UWB device through a UWB or a narrow band (NB), a ranging control message for UWB multiple transmissions in a first slot within a ranging round;
receiving, from the first UWB device through the UWB or the NB, a triggering packet for triggering the UWB multiple transmissions in a second slot within the ranging round; and
transmitting, through the UWB, a first packet in a third slot within the ranging round, based on the ranging control message,
wherein the third slot within the ranging round is used for a second packed to be transmitted by a third UWB device, based on the ranging control message.

10. The method of claim 9, wherein, based on the triggering packet being received through the UWB channel, the triggering packet comprises a synchronization header, and the synchronization header comprises a SYNC field and an SFD field.

11. The method of claim 10, wherein, based on the triggering packet being received through the NB channel, the triggering packet comprises a poll message, and the poll message comprises at least one of address information of the first UWB device, and address information of the second UWB device and the third UWB device.

12. The method of claim 9, wherein the first packet comprises a first ranging sequence fragment (first RSF),
wherein the second packet comprises a second ranging sequence fragment (second RSF), and
wherein the first RSF is generated based on an MMRS sequence different from the second RSF.

13. The method of claim 12, wherein the ranging control message comprises a first scheduling list element regarding the second UWB device, and a second scheduling list element regarding the third UWB device,
wherein the first scheduling list element comprises a first sequence index field indicating the index of a first MMRS sequence used for the first RSF,
wherein the second scheduling list element comprises a second sequence index field indicating the index of a second MMRS sequence used for the second RSF, and
wherein the value of the first sequence index field is configured to be different from the value of the second sequence index field.

14. A first ultra-wideband (UWB) device comprising:
a transceiver; and
a controller coupled with the transceiver and configured to control the transceiver, wherein the UWB device is configured to:
transmit a ranging control message for UWB multiple transmissions through a UWB or a narrow band (NB) in a first slot within a ranging round;
transmit a triggering packet for triggering the UWB multiple transmissions through the UWB or the NB in a second slot within the ranging round;
receive a first packet transmitted by a second UWB device in a third slot within the ranging round, based on the ranging control message, through the UWB; and
receive a second packet transmitted by a third UWB device in the third slot within the ranging round, based on the ranging control message, through the UWB.

15. A second ultra-wideband (UWB) device comprising:
a transceiver; and
a controller coupled with the transceiver and configured to control the transceiver,
wherein the UWB device is configured to:
receive a ranging control message for UWB multiple transmissions from a first UWB device through a UWB or a narrow band (NB) in a first slot within a ranging round;
receive a triggering packet for triggering the UWB multiple transmissions from the first UWB device through the UWB or the NB in a second slot within the ranging round; and
transmit a first packet through the UWB in a third slot within the ranging round, based on the ranging control message,
wherein the third slot within the ranging round is used for a second packed to be transmitted by a third UWB device, based on the ranging control message.
